# EUROPEAN PATENT APPLICATION

(11) **EP 4 575 964 A1**
(43) Date of publication of application: **25.06.2025**
(21) Application number: 22958421.4
(22) Date of filing: 15.09.2022
(51) Int. Cl.: G06Q 30/0241

(54) **MODEL TRAINING METHOD AND APPARATUS, ADVERTISEMENT PLACEMENT METHOD AND APPARATUS, AND ELECTRONIC DEVICE**

(71) Applicant: Huawei Technologies Co., Ltd., Shenzhen, Guangdong 518129 (CN)
(72) Inventor: JIN, Zhao, Shenzhen, Guangdong 518129 (CN); CHEN, Zhongfu, Shenzhen, Guangdong 518129 (CN); XIA, Zenghua, Shenzhen, Guangdong 518129 (CN); MA, Zhongrui, Shenzhen, Guangdong 518129 (CN)
(74) Representative: Goddar, Heinz J.
(86) International application number: PCT/CN2022/118950
(87) International publication number: WO 2024/055228

(57) **Abstract**

An advertisement placement method is provided, and may be applied to an electronic device having a display. The method includes: obtaining a first access operation of a user on a first page; in response to the first access operation, obtaining a first context feature related to the first page, where the first context feature is irrelevant to a user profile and/or a user behavior of the user; and displaying f advertisements based on the first context feature, where f≥1. In this way, a context feature is used to replace a user feature, to reduce dependence on the user feature, and implement precise advertisement placement when a feature, for example, a user profile, cannot be obtained.

## Description

### TECHNICAL FIELD

This application relates to the field of artificial intelligence (artificial intelligence, AI) technologies, and in particular, to a model training method, an advertisement placement method, an apparatus, and an electronic device.

### BACKGROUND

Currently, advertisement placement is usually performed based on a profile and a behavior of a user. However, as protection of user information is continuously enhanced, it is increasingly difficult to obtain an identity of the user. Consequently, the profile of the user cannot be obtained, resulting in poor advertisement placement effect.

### SUMMARY

This application provides a model training method, an advertisement placement method, an apparatus, an electronic device, a server, a computer storage medium, and a computer product, to improve advertisement placement effect.

According to a first aspect, this application provides a model training method. The method includes: obtaining a first sample set, where the first sample set includes a first training sample, and the first training sample includes at least one advertisement feature of an advertisement and at least one context feature corresponding to the advertisement; processing the at least one context feature by using a first model, to obtain a first feature vector; and processing the at least one advertisement feature by using a second model, to obtain a second feature vector; processing a processing result of at least one stage in the first model and a processing result of at least one stage in the second model by using a third model, to obtain a first correlation score, where the first correlation score represents a matching degree between the at least one context feature and the at least one advertisement feature; obtaining, based on the first feature vector, the second feature vector, the first correlation score, and a sample label of the first training sample, a loss corresponding to the first training sample; and training the first model and the second model based on a loss corresponding to at least one training sample in the first sample set.

In this way, the context feature is used to replace a user feature for model training, and therefore dependency on the user feature in a subsequent model use process is reduced. In addition, the third model is added in a process of training the first model and the second model, to implement interaction modeling between the first model and the second model, and therefore implement interaction between the context feature and the advertisement feature, enhance association between the context feature and the advertisement feature, and improve representation effect of the finally obtained first model and second model. For example, the trained first model may be used to perform feature extraction on a context feature related to a page accessed by a user, and the trained second model may be used to perform feature extraction on an advertisement.

In a possible implementation, the processing the at least one context feature by using a first model, to obtain a first feature vector specifically includes: encoding the at least one context feature by using the first model, to obtain N third feature vectors, where N≥1; and when N=1, processing the N third feature vectors by using the first model, to obtain the first feature vector; or when N≥2, concatenating the N third feature vectors by using the first model, to obtain one fourth feature vector; and processing the fourth feature vector by using the first model, to obtain the first feature vector.

In a possible implementation, the processing the at least one advertisement feature by using a second model, to obtain a second feature vector specifically includes: encoding the at least one advertisement feature by using the second model, to obtain M fifth feature vectors, where M≥1; and when M=1, processing the M fifth feature vectors by using the second model, to obtain the second feature vector; or when M≥2, concatenating the M fifth feature vectors by using the second model, to obtain one sixth feature vector; and processing the sixth feature vector by using the second model, to obtain the second feature vector.

In a possible implementation, the obtaining, based on the first feature vector, the second feature vector, the first correlation score, and a sample label of the first training sample, a loss corresponding to the first training sample specifically includes: obtaining a first loss based on the first feature vector, the second feature vector, and the sample label of the first training sample; obtaining a second loss based on the first correlation score and the sample label of the first training sample; and obtaining, based on the first loss and the second loss, the loss corresponding to the first training sample.

In a possible implementation, the obtaining a first loss based on the first feature vector, the second feature vector, and the sample label of the first training sample includes: determining a second correlation score based on the first feature vector and the second feature vector, where the second correlation score represents a matching degree between the at least one context feature and the at least one advertisement feature; and obtaining the first loss based on the second correlation score and the sample label of the first training sample.

In a possible implementation, the method may further include: training the third model based on a loss corresponding to at least one training sample in the first sample set.

In a possible implementation, the third model is a neural network model, and is used to assist, in a process of training the first model and the second model, in calculating a loss corresponding to a training sample in the first sample set. For example, a model structure of the third model may be, but is not limited to, a deep neural network (deep neural networks, DNN), a multi-layer neural network (multi-layer perception, MLP), a deep factorization machine (deep factorization machine, DeepFM), an extreme deep factorization machine model (extreme deep factorization machine, xDeepFM), a deep cross network (deep cross network, DCN), or a deep interest network (deep interest network, DIN).

According to a second aspect, this application provides an advertisement placement method, applied to an electronic device having a display. The method may include: obtaining an access operation of a user on a first page; in response to the access operation, obtaining a first context feature related to the first page, where the first context feature is irrelevant to a user profile and/or a user behavior of the user; and displaying f advertisements based on the first context feature, where f≥1.

In this way, during advertisement placement, a context feature is used to replace a user feature, to reduce dependence on the user feature, implement, when the user feature (for example, a user profile or a user behavior) cannot be obtained, precise advertisement placement by using a context feature related to a page accessed by the user, and resolve a problem of trade-off between privacy protection of user information and precise advertisement placement.

In a possible implementation, after the displaying f advertisements, the method may further include: obtaining a second access operation of the user on a second page; in response to the second access operation, obtaining a second context feature related to the second page, where the second context feature is irrelevant to the user profile and/or the user behavior of the user; and displaying g advertisements based on the second context feature, where g≥1, and at least a part of the g advertisements is different from an advertisement in the f advertisements. For example, content on the first page is different from content on the second page. Because the two pages have different content, the two pages also correspond to different context features, and finally display different advertisements.

In a possible implementation, displaying an advertisement based on a context feature specifically includes: processing the context feature by using a first model, to obtain a first feature vector, where the first model is a neural network model, and the context feature is the first context feature or the second context feature; determining similarity values between the first feature vector and K second feature vectors, to obtain K similarity values, where each second feature vector represents a feature of one advertisement; screening out Q similarity values from the K similarity values, where each of the Q similarity values is greater than a similarity value other than the Q similarity values in the K similarity values, and 1≤Q≤K; and displaying advertisements respectively corresponding to the Q similarity values, where when the context feature is the first context feature, the advertisements respectively corresponding to the Q similarity values are the f advertisements; or when the context feature is the second context feature, the advertisements respectively corresponding to the Q similarity values are the g advertisements.

In a possible implementation, displaying an advertisement based on a context feature specifically includes: sending a first message to a server, where the first message includes the context feature, and the context feature is the first context feature or the second context feature; receiving a second message sent by the server, where the second message includes Q advertisements or advertisement indication information; the advertisement indication information are used to generate the Q advertisements; and when the context feature is the first context feature, the Q advertisements are the f advertisements; or when the context feature is the second context feature, the Q advertisements are the g advertisements; and displaying the Q advertisements.

In a possible implementation, displaying an advertisement based on a context feature specifically includes: processing the context feature by using a first model, to obtain a first feature vector, where the first model is a neural network model, and the context feature is the first context feature or the second context feature; sending a first message to a server, where the first message includes the first feature vector; receiving a second message sent by the server, where the second message includes Q advertisements or advertisement indication information; the advertisement indication information are used to generate the Q advertisements; and when the context feature is the first context feature, the Q advertisements are the f advertisements; or when the context feature is the second context feature, the Q advertisements are the g advertisements; and displaying the Q advertisements.

In a possible implementation, displaying an advertisement based on a context feature specifically includes: sending a first message to a server, where the first message includes the context feature, the first message indicates the server to perform feature extraction on the context feature, and the context feature is the first context feature or the second context feature; receiving a second message sent by the server, where the second message includes a first feature vector extracted by the server based on the context feature; Determining similarity values between the first feature vector and K second feature vectors, to obtain K similarity values, where each second feature vector represents a feature of one advertisement; screening out Q similarity values from the K similarity values, where each of the Q similarity values is greater than a similarity value other than the Q similarity values in the K similarity values, and 1≤Q≤K; and displaying advertisements respectively corresponding to the Q similarity values, where when the context feature is the first context feature, the advertisements respectively corresponding to the Q similarity values are the f advertisements; or when the context feature is the second context feature, the advertisements respectively corresponding to the Q similarity values are the g advertisements.

In a possible implementation, the first context feature includes one or more of the following: an identifier of the first page, a text on the first page, an identifier of a video on the first page, an identifier of a picture on the first page, an identifier of an audio on the first page, IP region information of the user, access time, a device type of the electronic device, an operator that provides a network service for the electronic device, a network type of the electronic device, a system language of the electronic device, a brand of the electronic device, a model of the electronic device, a scenario in which the electronic device needs to display an advertisement, a size of an area that is in a display interface of the electronic device and that is used to display an advertisement, and a country in which the electronic device is located.

In a possible implementation, the second context feature includes one or more of the following: an identifier of the second page, a text on the second page, an identifier of a video on the second page, an identifier of a picture on the second page, an identifier of an audio on the second page, the IP region information of the user, the access time, the device type of the electronic device, the operator that provides the network service for the electronic device, the network type of the electronic device, the system language of the electronic device, the brand of the electronic device, the model of the electronic device, the scenario in which the electronic device needs to display the advertisement, the size of the area that is in the display interface of the electronic device and that is used to display the advertisement, and the country in which the electronic device is located.

According to a third aspect, this application provides an advertisement placement method, applied to a server. The method includes: receiving a first message sent by an electronic device, where the first message includes a context feature related to a page accessed by a user on the electronic device, and the context feature is irrelevant to a user profile and/or a user behavior of the user; in response to the first message, obtaining, based on the context feature, R advertisements or information that indicate R advertisements, where R≥1; and sending a second message to the electronic device, where the second message indicates the electronic device to display the R advertisements.

In a possible implementation, the obtaining, based on the context feature, R advertisements or information that indicate R advertisements specifically includes: processing the context feature by using a first model, to obtain a first feature vector, where the first model is a neural network model; determining similarity values between the first feature vector and K second feature vectors, to obtain K similarity values, where each second feature vector represents a feature of one advertisement; screening out Q similarity values from the K similarity values, where each of the Q similarity values is greater than a similarity value other than the Q similarity values in the K similarity values, and 1≤Q≤K; and using advertisements respectively corresponding to the Q similarity values as the R advertisements, or using information that indicate advertisements and that respectively correspond to the Q similarity values as the information that indicate the R advertisements.

In a possible implementation, the context feature includes one or more of the following: an identifier of the page, a text on the page, an identifier of a video on the page, an identifier of a picture on the page, an identifier of an audio on the page, IP region information of the user, access time, a device type of the electronic device, an operator that provides a network service for the electronic device, a network type of the electronic device, a system language of the electronic device, a brand of the electronic device, a model of the electronic device, a scenario in which the electronic device needs to display an advertisement, a size of an area that is in a display interface of the electronic device and that is used to display an advertisement, and a country in which the electronic device is located.

According to a fourth aspect, this application provides a model training apparatus. The apparatus includes an obtaining module and a processing module. The obtaining module is configured to obtain a first sample set, where the first sample set includes a first training sample, and the first training sample includes at least one advertisement feature of an advertisement and at least one context feature corresponding to the advertisement. The processing module is configured to: process the at least one context feature by using a first model, to obtain a first feature vector; and process the at least one advertisement feature by using a second model, to obtain a second feature vector. The processing module is further configured to process a processing result of at least one stage in the first model and a processing result of at least one stage in the second model by using a third model, to obtain a first correlation score, where the first correlation score represents a matching degree between the at least one context feature and the at least one advertisement feature. The processing module is further configured to obtain, based on the first feature vector, the second feature vector, the first correlation score, and a sample label of the first training sample, a loss corresponding to the first training sample. The processing module is further configured to train the first model and the second model based on a loss corresponding to at least one training sample in the first sample set.

In a possible implementation, when processing the at least one context feature by using the first model, to obtain the first feature vector, the processing module is specifically configured to: encode the at least one context feature by using the first model, to obtain N third feature vectors, where N≥1; and when N=1, process the N third feature vectors by using the first model, to obtain the first feature vector; or when N≥2, concatenate the N third feature vectors by using the first model, to obtain one fourth feature vector; and process the fourth feature vector by using the first model, to obtain the first feature vector.

In a possible implementation, when processing the at least one advertisement feature by using the second model, to obtain the second feature vector, the processing module is specifically configured to: encode the at least one advertisement feature by using the second model, to obtain M fifth feature vectors, where M≥1; and when M=1, process the M fifth feature vectors by using the second model, to obtain the second feature vector; or when M≥2, concatenate the M fifth feature vectors by using the second model, to obtain one sixth feature vector; and process the sixth feature vector by using the second model, to obtain the second feature vector.

In a possible implementation, when obtaining, based on the first feature vector, the second feature vector, the first correlation score, and the sample label of the first training sample, the loss corresponding to the first training sample, the processing module is specifically configured to: obtain a first loss based on the first feature vector, the second feature vector, and the sample label of the first training sample; obtain a second loss based on the first correlation score and the sample label of the first training sample; and obtain, based on the first loss and the second loss, the loss corresponding to the first training sample.

In a possible implementation, when obtaining the first loss based on the first feature vector, the second feature vector, and the sample label of the first training sample, the processing module is specifically configured to: determine a second correlation score based on the first feature vector and the second feature vector, where the second correlation score represents a matching degree between the at least one context feature and the at least one advertisement feature; and obtain the first loss based on the second correlation score and the sample label of the first training sample.

In a possible implementation, the processing module is further configured to: train the third model based on a loss corresponding to at least one training sample in the first sample set.

In a possible implementation, the third model is a neural network model, and is used to assist, in a process of training the first model and the second model, in calculating a loss corresponding to a training sample in the first sample set.

In a possible implementation, the trained first model is used to perform feature extraction on a context feature related to a page accessed by a user, and the trained second model is used to perform feature extraction on an advertisement.

According to a fifth aspect, this application provides an advertisement placement apparatus, where the advertisement placement apparatus may be deployed in an electronic device having a display. The apparatus may include an obtaining module and a display module. The obtaining module is configured to: obtain an access operation of a user on a first page; and in response to the access operation, obtain a first context feature related to the first page, where the context feature is irrelevant to a user profile and/or a user behavior of the user. The display module is configured to display f advertisements based on the first context feature, where f≥1.

In a possible implementation, after the display module displays the f advertisements, the obtaining module is further configured to: obtain a second access operation of the user on a second page; and in response to the second access operation, obtain a second context feature related to the second page, where the second context feature is irrelevant to the user profile and/or the user behavior of the user. The display module is further configured to display g advertisements based on the second context feature, where g≥1, and at least a part of the g advertisements is different from an advertisement in the f advertisements.

In a possible implementation, the apparatus further includes: a processing module, configured to process the context feature by using a first model, to obtain a first feature vector, where the first model is a neural network model, and the context feature is the first context feature or the second context feature. The processing module is further configured to determine similarity values between the first feature vector and K second feature vectors, to obtain K similarity values, where each second feature vector represents a feature of one advertisement. The processing module is further configured to screen out Q similarity values from the K similarity values, where each of the Q similarity values is greater than a similarity value other than the Q similarity values in the K similarity values, and 1≤Q≤K. The display module is configured to display advertisements respectively corresponding to the Q similarity values, where when the context feature is the first context feature, the advertisements respectively corresponding to the Q similarity values are the f advertisements; or when the context feature is the second context feature, the advertisements respectively corresponding to the Q similarity values are the g advertisements.

In a possible implementation, the apparatus further includes: a communication module, configured to send a first message to a server, where the first message includes the context feature, and the context feature is the first context feature or the second context feature. The communication module is further configured to receive a second message sent by the server, where the second message includes Q advertisements or advertisement indication information; the advertisement indication information are used to generate the Q advertisements; and when the context feature is the first context feature, the Q advertisements are the f advertisements; or when the context feature is the second context feature, the Q advertisements are the g advertisements. The display module is configured to display the Q advertisements.

In a possible implementation, the apparatus further includes: a processing module, configured to process the context feature by using a first model, to obtain a first feature vector, where the first model is a neural network model, and the context feature is the first context feature or the second context feature; and a communication module, configured to send a first message to a server, where the first message includes the first feature vector. The communication module is further configured to receive a second message sent by the server, where the second message includes Q advertisements or advertisement indication information; the advertisement indication information are used to generate the Q advertisements; and when the context feature is the first context feature, the Q advertisements are the f advertisements; or when the context feature is the second context feature, the Q advertisements are the g advertisements. The display module is configured to display the Q advertisements.

In a possible implementation, the apparatus further includes: a communication module, configured to send a first message to a server, where the first message includes the context feature, the first message indicates the server to perform feature extraction on the context feature, and the context feature is the first context feature or the second context feature, where the communication module is further configured to receive a second message sent by the server, where the second message includes a first feature vector extracted by the server based on the context feature; and a processing module, configured to determine similarity values between the first feature vector and K second feature vectors, to obtain K similarity values, where each second feature vector represents a feature of one advertisement. The processing module is further configured to screen out Q similarity values from the K similarity values, where each of the Q similarity values is greater than a similarity value other than the Q similarity values in the K similarity values, and 1≤Q≤K. The display module is configured to display advertisements respectively corresponding to the Q similarity values, where when the context feature is the first context feature, the advertisements respectively corresponding to the Q similarity values are the f advertisements; or when the context feature is the second context feature, the advertisements respectively corresponding to the Q similarity values are the g advertisements.

In a possible implementation, the first context feature includes one or more of the following: an identifier of the first page, a text on the first page, an identifier of a video on the first page, an identifier of a picture on the first page, an identifier of an audio on the first page, IP region information of the user, access time, a device type of the electronic device, an operator that provides a network service for the electronic device, a network type of the electronic device, a system language of the electronic device, a brand of the electronic device, a model of the electronic device, a scenario in which the electronic device needs to display an advertisement, a size of an area that is in a display interface of the electronic device and that is used to display an advertisement, and a country in which the electronic device is located.

In a possible implementation, the second context feature includes one or more of the following: an identifier of the second page, a text on the second page, an identifier of a video on the second page, an identifier of a picture on the second page, an identifier of an audio on the second page, the IP region information of the user, the access time, the device type of the electronic device, the operator that provides the network service for the electronic device, the network type of the electronic device, the system language of the electronic device, the brand of the electronic device, the model of the electronic device, the scenario in which the electronic device needs to display the advertisement, the size of the area that is in the display interface of the electronic device and that is used to display the advertisement, and the country in which the electronic device is located.

According to a sixth aspect, this application provides an advertisement placement apparatus, where the apparatus is deployed in a server. The apparatus includes a communication module and a processing module. The communication module may be configured to receive a first message sent by an electronic device, where the first message includes a context feature related to a page accessed by a user on the electronic device, and the context feature is irrelevant to a user profile and/or a user behavior of the user. The processing module may be configured to: in response to the first message, obtain, based on the context feature, R advertisements or information that indicate R advertisements, where R≥1. The communication module may be further configured to send a second message to the electronic device, where the second message indicates the electronic device to display the R advertisements.

In a possible implementation, when obtaining, based on the context feature, the R advertisements or the information that indicate the R advertisements, the processing module is specifically configured to: process the context feature by using a first model, to obtain a first feature vector, where the first model is a neural network model; determine similarity values between the first feature vector and K second feature vectors, to obtain K similarity values, where each second feature vector represents a feature of one advertisement; screen out Q similarity values from the K similarity values, where each of the Q similarity values is greater than a similarity value other than the Q similarity values in the K similarity values, and 1≤Q≤K; and use advertisements respectively corresponding to the Q similarity values as the R advertisements, or use information that indicate advertisements and that respectively correspond to the Q similarity values as the information that indicate the R advertisements.

In a possible implementation, the context feature includes one or more of the following: an identifier of the page, a text on the page, an identifier of a video on the page, an identifier of a picture on the page, an identifier of an audio on the page, IP region information of the user, access time, a device type of the electronic device, an operator that provides a network service for the electronic device, a network type of the electronic device, a system language of the electronic device, a brand of the electronic device, a model of the electronic device, a scenario in which the electronic device needs to display an advertisement, a size of an area that is in a display interface of the electronic device and that is used to display an advertisement, and a country in which the electronic device is located.

According to a seventh aspect, this application provides an electronic device, including: a display; at least one memory, configured to store a program; and at least one processor, configured to execute the program stored in the memory. When the program stored in the memory is executed, the processor is configured to perform the method described in any one of the second aspect or the possible implementations of the second aspect.

According to an eighth aspect, this application provides a server, including: at least one memory, configured to store a program; and at least one processor, configured to execute the program stored in the memory. When the program stored in the memory is executed, the processor is configured to perform the method described in any one of the third aspect or the possible implementations of the third aspect.

According to a ninth aspect, this application provides a computer-readable storage medium. The computer-readable storage medium stores a computer program. When the computer program is run on a processor, the processor is enabled to perform the method described in any one of the first aspect or the possible implementations of the first aspect, or perform the method described in any one of the second aspect or the possible implementations of the second aspect, or perform the method described in any one of the third aspect or the possible implementations of the third aspect.

According to a tenth aspect, this application provides a computer program product. When the computer program product runs on a processor, the processor is enabled to perform the method described in any one of the first aspect or the possible implementations of the first aspect, or perform the method described in any one of the second aspect or the possible implementations of the second aspect, or perform the method described in any one of the third aspect or the possible implementations of the third aspect.

It may be understood that, for beneficial effect of the third aspect to the tenth aspect, refer to related descriptions in the first aspect and the second aspect. Details are not described herein again.

### BRIEF DESCRIPTION OF DRAWINGS

FIG. 1 is a diagram of a process of an advertisement recall solution according to an embodiment of this application;
FIG. 2 is a diagram of an architecture of obtaining a user representation model and an advertisement representation model through training based on a dual-tower model according to an embodiment of this application;
FIG. 3 is a diagram of an architecture of obtaining a context representation model and an advertisement representation model through training based on a dual-tower model according to an embodiment of this application;
FIG. 4 is a diagram of a process of another advertisement recall solution according to an embodiment of this application;
FIG. 5 is a schematic flowchart of a model training method according to an embodiment of this application;
FIG. 6 is a schematic flowchart of an advertisement placement method according to an embodiment of this application;
FIG. 7 is a diagram of steps of displaying an advertisement based on a context feature according to an embodiment of this application;
FIG. 8 is a diagram of comparison of advertisement placement for a same user using different mobile phones to browse same content at a same moment according to an embodiment of this application;
FIG. 9 is a diagram of comparison of advertisement placement for different users according to an embodiment of this application;
FIG. 10 is a diagram of comparison of advertisement placement for a same user using a same mobile phone to browse different content at different moments according to an embodiment of this application;
FIG. 11 is a diagram of a structure of a model training apparatus according to an embodiment of this application;
FIG. 12 is a diagram of a structure of an advertisement placement apparatus according to an embodiment of this application; and
FIG. 13 is a diagram of a structure of an advertisement placement apparatus according to an embodiment of this application.

### DESCRIPTION OF EMBODIMENTS

The term "and/or" in this specification describes an association relationship between associated objects and represents that three relationships may exist. For example, A and/or B may represent the following three cases: Only A exists, both A and B exist, and only B exists. The symbol "/" in this specification indicates an "or" relationship between associated objects. For example, A/B indicates A or B.

In the specification and claims of this application, the terms "first", "second", and the like are intended to distinguish between different objects, but do not indicate a particular order of the objects. For example, a first response message, a second response message, and the like are used to distinguish between different response messages, but do not indicate a particular order of the response messages.

In embodiments of this application, the term "example", "for example", or the like is used to represent giving an example, an illustration, or a description. Any embodiment or design scheme described with "example" or "for example" in embodiments of this application should not be explained as being more preferred or having more advantages than another embodiment or design scheme. Exactly, use of the term "example", "for example", or the like is intended to present a relative concept in a specific manner.

In descriptions of embodiments of this application, unless otherwise specified, "a plurality of" means two or more. For example, a plurality of processing units are two or more processing units, and a plurality of elements are two or more elements.

For example, to implement user-oriented precise advertisement placement, a representation model related to a user profile may be trained based on feature data of the user profile and a user behavior, and an advertisement most related to a user is recalled by using the model, to implement precise advertisement placement. To complete an advertisement representation recall technology based on a user profile, usually, first, training may be separately performed on feature data on a user side and an advertisement side based on a dual-tower structure (a user tower and an advertisement tower), to obtain a user-side representation model (referred to as a "user representation model" below) and an advertisement-side representation model (referred to as an "advertisement representation model" below). Then, the user representation model and the advertisement representation model are used to implement user-oriented precise advertisement placement.

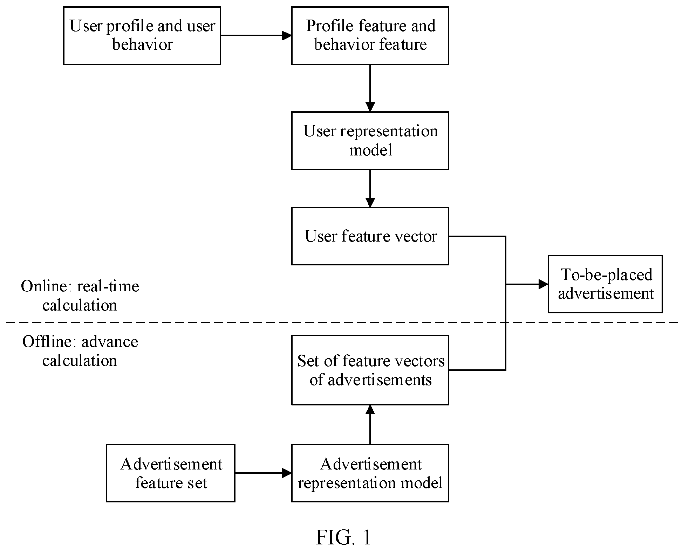

For example, FIG. 1 shows an advertisement recall process based on a user profile and a user behavior. As shown in FIG. 1, the process includes two stages: an offline stage and an online stage. In the offline stage, an advertisement representation model is used to process a set of features (for example, titles, categories, brands, tags, text content, picture content, or video content) of advertisements, to obtain a set of feature vectors (referred to as "advertisement-side feature vectors" below) of the advertisements. In the online stage, after the user profile and the user behavior are obtained, a profile feature (for example, a gender, an age, or a province) of a user and a behavior feature (for example, a category or a title of clicked content) of the user are determined. Then, the profile feature and the behavior feature of the user are processed online in real time by using a user representation model, to obtain a feature vector (referred to as a "user-side feature vector" below) of the user.

After the user-side feature vector is obtained, a similarity between the user-side feature vector and each advertisement-side feature vector may be calculated by using a cosine similarity algorithm or the like, and advertisements corresponding to one or more advertisement-side feature vectors with high similarities are selected for placement, that is, a to-be-placed advertisement is obtained. For example, after similarities are sorted in descending order, advertisements corresponding to the first five similarities may be used as to-be-placed advertisements. In this way, a required advertisement is recalled from a preset advertisement set.

In the advertisement recall solution shown in FIG. 1, the user profile and/or the user behavior are/is required. However, as protection of user information is continuously enhanced, it is increasingly difficult to obtain the user profile and/or the user behavior. Consequently, it is difficult to use the user representation model to implement precise advertisement placement, resulting in poor advertisement placement effect. For example, when a user A browses a web page by using a mobile phone, if it is determined, based on registration information of the user A, that a user profile of the user A is: a gender "male", an age "18 to 30", and a residence city "city S"; and it is determined, based on an operation behavior of the user A, that a user behavior 1 is: a category of browsed content "vehicles", a title "new energy vehicles have dropped in price", and browsing time "08:00 AM", and a user behavior 2 is: a category of browsed content "new energy", a title "research on new energy vehicles", and browsing time "08:20 AM", an advertisement of a new energy vehicle that is suitable for male drivers aged 20 to 30 and available in the city S may be recommended to the user A. However, when user data (for example, user information and/or the operation behavior) of the user A is protected, the user profile and the user behavior of the user A cannot be obtained. Consequently, which advertisement should be recommended to the user A cannot be learned. In this case, some advertisements that the user A is not interested in may be recommended, resulting in poor advertisement placement effect.

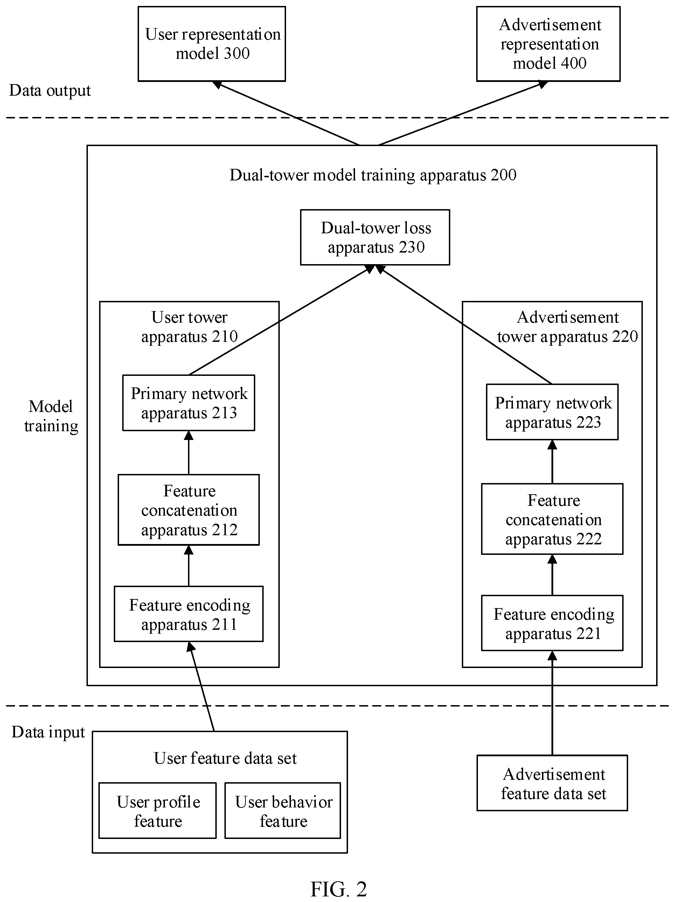

For example, FIG. 2 is a diagram of an architecture of obtaining a user representation model and an advertisement representation model through training based on a dual-tower model. As shown in FIG. 2, a dual-tower model training apparatus 200 includes a user tower apparatus 210, an advertisement tower apparatus 220, and a dual-tower loss apparatus 230. The dual-tower model training apparatus 200 may train the user tower apparatus 210 and the advertisement tower apparatus 220. After the dual-tower model training apparatus 200 completes training, the user tower apparatus 210 is converted into a user representation model 300 and output by the dual-tower model training apparatus 200, and the advertisement tower apparatus 220 is converted into an advertisement representation model 400 and output by the dual-tower model training apparatus 200.

The user tower apparatus 210 includes a feature encoding (embedding) apparatus 211, a feature concatenation (concatenate) apparatus 212, and a primary network apparatus 213. The feature encoding apparatus 211 is configured to perform feature encoding on each user profile feature and each user behavior feature in a user feature data set, to represent a sparse original feature as a dense feature vector. For example, the feature encoding apparatus 211 may use, but not limited to, a word2vec or item2vec algorithm to perform encoding on features in the user feature data set. The feature concatenation apparatus 212 is configured to concatenate, into one feature vector, feature vectors that correspond to different user features and that are obtained through encoding by the feature encoding apparatus 211. A function of the feature concatenation apparatus 212 may also be understood as feature fusion. The primary network apparatus 213 is configured to control the feature vector obtained through concatenation by the feature concatenation apparatus 212 to undergo sufficient feature interaction across different dimensions, so that more valid feature information can be obtained. A feature vector output by the primary network apparatus 213 may represent a specific user. For example, a model structure of the primary network apparatus 213 may be, but is not limited to, a deep neural network (deep neural networks, DNN), a multi-layer neural network (multi-layer perception, MLP), a deep factorization machine (deep factorization machine, DeepFM), an extreme deep factorization machine model (extreme deep factorization machine, xDeepFM), a deep cross network (deep cross network, DCN), or a deep interest network (deep interest network, DIN).

The advertisement tower apparatus 220 includes a feature encoding (embedding) apparatus 221, a feature concatenation (concatenate) apparatus 222, and a primary network apparatus 223. The feature encoding apparatus 221 is configured to perform feature encoding on each advertisement feature in an advertisement feature data set, to represent a sparse original feature as a dense feature vector. The feature concatenation apparatus 222 is configured to concatenate, into one feature vector, feature vectors that correspond to different advertisement features and that are obtained through encoding by the feature encoding apparatus 221. The primary network apparatus 223 is configured to control the feature vector obtained through concatenation by the feature concatenation apparatus 222 to undergo sufficient feature interaction across different dimensions, so that more valid feature information can be obtained. A feature vector output by the primary network apparatus 223 may represent a specific advertisement. For example, a model structure of the primary network apparatus 223 may be, but not limited to, the same as that of the primary network apparatus 213.

The dual-tower loss apparatus 230 is a loss function in the dual-tower model training apparatus 200; and mainly evaluates training degrees of the user tower apparatus 210 and the advertisement tower apparatus 220 according to a similarity comparison method, for example, a cosine similarity comparison method, and reversely propagates the training degrees to the user tower apparatus 210 and the advertisement tower apparatus 220.

In a process of training the user tower apparatus 210 and the advertisement tower apparatus 220 by using the dual-tower model training apparatus 200, a model parameter in the user tower apparatus 210 may be continuously adjusted based on a result output by the dual-tower loss apparatus 230, so that representation of a user feature vector output by the user tower apparatus 210 is more accurate. In addition, a model parameter in the advertisement tower apparatus 220 may be continuously adjusted based on the result output by the dual-tower loss apparatus 230, so that representation of an advertisement feature vector output by the advertisement tower apparatus 220 is more accurate. After training is completed, the dual-tower model training apparatus 200 may solidify a parameter with optimal training effect of the user tower apparatus 210 in the training process, to generate and output the user representation model 300. In addition, the dual-tower model training apparatus 200 may solidify a parameter with optimal training effect of the advertisement tower apparatus 220 in the training process, to generate and output the advertisement representation model 400. The user representation model 300 is used to represent an online user feature as a feature vector, and the advertisement representation model 400 is used to represent an offline advertisement feature as a feature vector.

It can be learned from FIG. 2 that, in a model training process, dependency on the user feature is also strong. In addition, in the model training process, there is no interaction between the user tower apparatus 210 and the advertisement tower apparatus 220. Therefore, feature association between the user tower apparatus 210 and the advertisement tower apparatus 220 depends on a behavior of a user (that is, a user behavior, for example, browsing a web page, browsing a video, clicking an advertisement, or paying for purchasing) on the advertisement. Once the user behavior cannot be obtained, model training cannot be implemented, or a trained model cannot be used. In addition, in a loss calculation stage, only a similarity between vectors is depended on, and loss calculation is too simple. Consequently, representation effect of a finally obtained model is poor.

In view of this, embodiments of this application provide a model training method. In the method, a context feature may be used to replace a user feature, to reduce dependency on the user feature. In addition, in the method, an auxiliary network is added to the dual-tower model training apparatus 200, to implement interaction modeling between the user tower apparatus 210 and the advertisement tower apparatus 220, and therefore implement interaction between the context feature and an advertisement feature, enhance association between the context feature and the advertisement feature, resolve an information exchange problem of features of two towers, and improve representation effect of a finally obtained model. The context feature may include: a content context feature related to an advertisement, and/or an environment context feature related to the advertisement. For example, the content context feature may be a context record of content included in the advertisement when a user accesses the advertisement, for example, a web page text, an identifier of a web page picture, an identifier of a video, or an identifier of an audio; and the environment context feature may be a context record related to an environment when the user accesses the advertisement, for example, internet protocol (internet protocol, IP) region information (that is, a home location of an IP address), access time, a device type of an electronic device, an operator that provides a network service for the electronic device, a network type of the electronic device, a system language of the electronic device, a brand of the electronic device, a model of the electronic device, a scenario in which the electronic device needs to display an advertisement, a size of an area that is in a display interface of the electronic device and that is used to display an advertisement, or a country in which the electronic device is located.

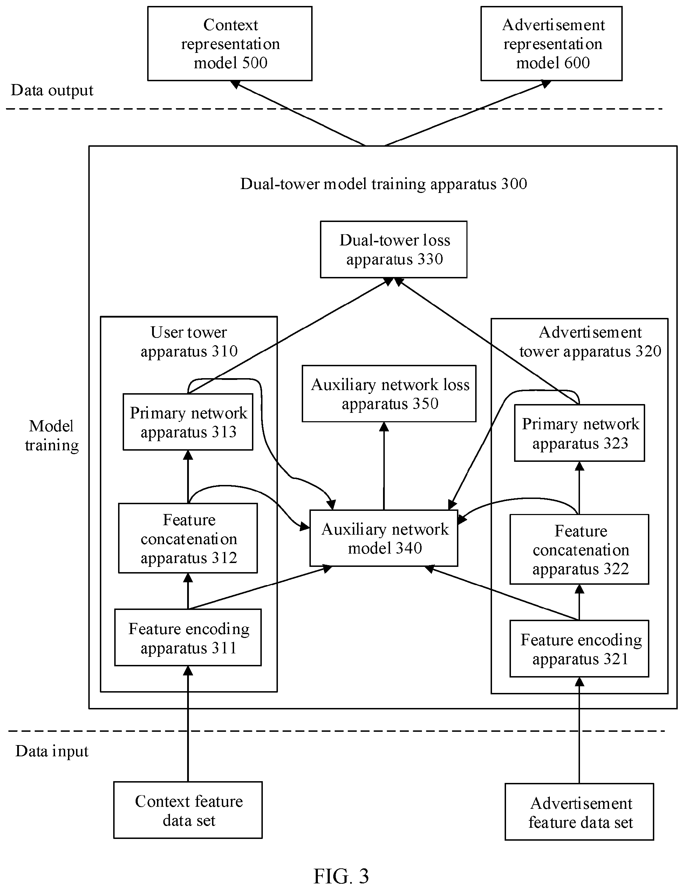

For example, FIG. 3 is a diagram of an architecture of obtaining a context representation model and an advertisement representation model through training based on a dual-tower model. As shown in FIG. 3, a dual-tower model training apparatus 300 includes a user tower apparatus 310, an advertisement tower apparatus 320, a dual-tower loss apparatus 330, an auxiliary network model 340, and an auxiliary network loss apparatus 350. For the user tower apparatus 310, refer to the foregoing descriptions of the user tower apparatus 210 in FIG. 2, provided that the user feature data set in FIG. 2 is replaced with a context feature data set. In other words, data required by the user tower apparatus 310 in FIG. 3 is a context feature. Details are not described herein again. For the advertisement tower apparatus 320, refer to the foregoing descriptions of the advertisement tower apparatus 220 in FIG. 2. Details are not described herein again. For the dual-tower loss apparatus 330, refer to the foregoing descriptions of the dual-tower loss apparatus 230 in FIG. 2. Details are not described herein again. For example, the context feature data set shown in FIG. 3 may include a content context feature related to an advertisement, and/or an environment context feature related to the advertisement, and an advertisement feature data set may include one or more of a title, a category, a brand, a tag, text content, picture content, or video content of the advertisement.

The auxiliary network model 340 is used to implement interaction modeling between the user tower apparatus 310 and the advertisement tower apparatus 320, and therefore implement interaction between the context feature and an advertisement feature, and enhance association between the context feature and the advertisement feature. Inputs of the auxiliary network model 310 may be an output of the user tower apparatus 210 in at least one stage and an output of the advertisement tower apparatus 220 in at least one stage. For example, the inputs of the auxiliary network model 310 may be outputs of feature encoding apparatuses 311 and 321, or may be outputs of feature concatenation apparatuses 312 and 322, or may be outputs of primary network apparatuses 313 and 323, or may be outputs of specific network layers of the primary network apparatuses 313 and 323, or may be a combination of several of the foregoing manners, for example, may be a combination of the output of the feature encoding apparatus 311 and the output of the primary network apparatus 323. This may be specifically determined based on an actual situation, and is not limited herein. An output of the auxiliary network model 340 may represent correlation between the context feature and the advertisement feature. For example, a model structure of the auxiliary network model 340 may be, but not limited to, the same as that of the primary network apparatus 313 or 323. In some embodiments, the auxiliary network model 340 may be pre-trained, or may be to-be-trained (that is, not trained). This may be specifically determined based on an actual situation, and is not limited herein. For example, when the auxiliary network model 340 is pre-trained, the context feature data set and the advertisement feature data set may be used as training data, to train the auxiliary network model 340.

The auxiliary network loss apparatus 350 is another loss function in the dual-tower model training apparatus 300; and mainly evaluates training degrees of the user tower apparatus 310, the advertisement tower apparatus 320, and the auxiliary network model 340 based on an output result of the auxiliary network model 340 and a sample label of a preset training sample, and reversely propagates the training degrees to the user tower apparatus 310, the advertisement tower apparatus 320, and the auxiliary network model 340.

In a process of training the user tower apparatus 310 and the advertisement tower apparatus 320 by using the dual-tower model training apparatus 300, a model parameter in the user tower apparatus 310 may be continuously adjusted based on a result output by the dual-tower loss apparatus 330 and a result output by the auxiliary network loss apparatus 350, so that representation of a context feature vector output by the user tower apparatus 310 is more accurate. In addition, a model parameter in the advertisement tower apparatus 320 may be continuously adjusted based on the result output by the dual-tower loss apparatus 330 and the result output by the auxiliary network loss apparatus 350, so that representation of an advertisement feature vector output by the advertisement tower apparatus 320 is more accurate. After training is completed, the dual-tower model training apparatus 300 may solidify a parameter with optimal training effect of the user tower apparatus 310 in the training process, to generate and output a context representation model 500. In addition, the dual-tower model training apparatus 300 may solidify a parameter with optimal training effect of the advertisement tower apparatus 320 in the training process, to generate and output an advertisement representation model 600. The context representation model 500 is used to represent an online context feature as a feature vector, and the advertisement representation model 600 is used to represent an offline advertisement feature as a feature vector.

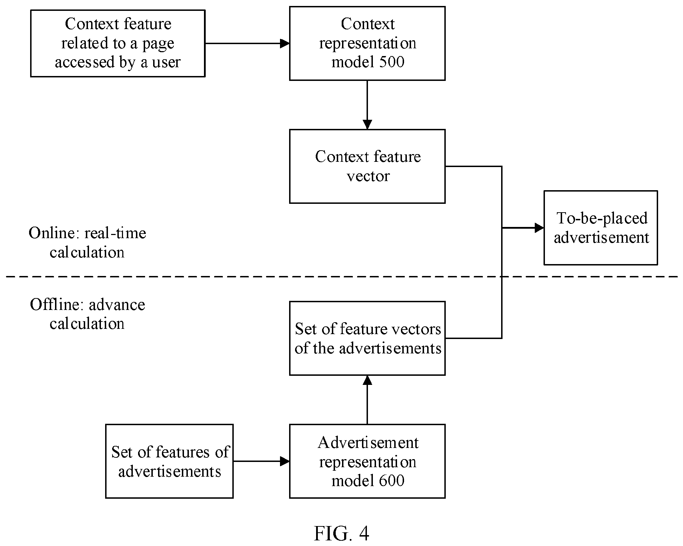

After the context representation model 500 and the advertisement representation model 600 are obtained: For example, FIG. 4 is a diagram of advertisement placement using the context representation model 500 and the advertisement representation model 600. As shown in FIG. 4, an advertisement placement process also includes two stages: an offline stage and an online stage. In the offline stage, the advertisement representation model 600 is used to process a set of features (for example, titles, categories, brands, tags, text content, picture content, or video content) of advertisements, to obtain a set of feature vectors (referred to as "advertisement-side feature vectors" below) of the advertisements. In the online stage, in a process of browsing a web page by a user, a context feature related to the page accessed by the user may be obtained with authorization of the user; and then the context feature is processed online in real time by using the context representation model 500, to obtain a context feature vector. After the context feature vector is obtained, a similarity between the context feature vector and each advertisement-side feature vector may be calculated by using a cosine similarity algorithm or the like, and an advertisement corresponding to one advertisement-side feature vector with a highest similarity is selected for placement, that is, a to-be-placed advertisement is obtained. In this way, precise advertisement placement is implemented without depending on a user feature.

The following describes, based on content in FIG. 3 and FIG. 4, the model training method and an advertisement placement method provided in embodiments of this application.

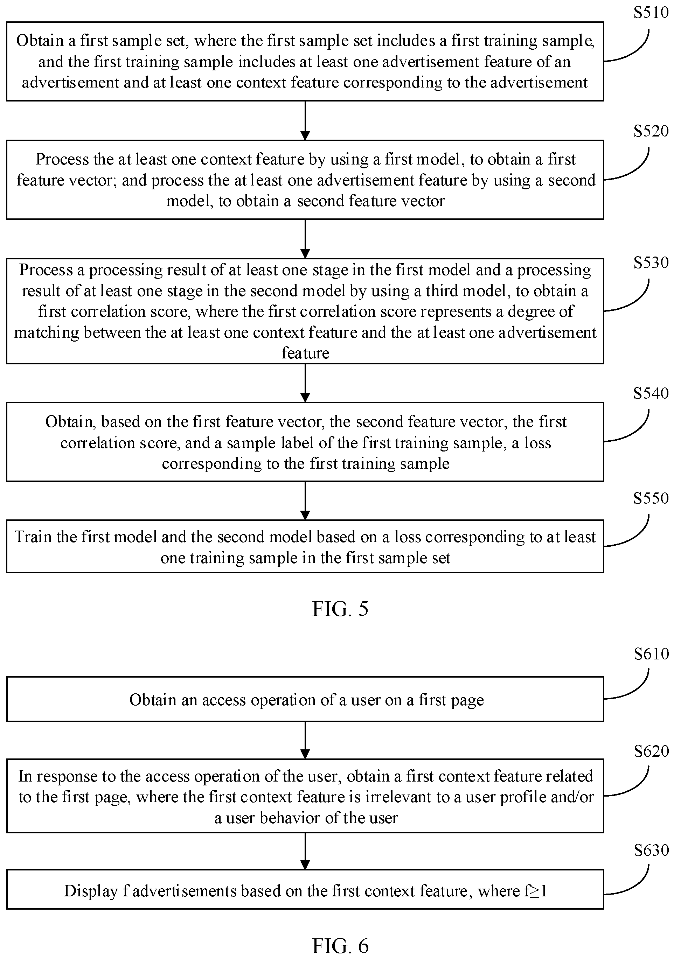

For example, FIG. 5 shows a model training method. It may be understood that the method may be performed by any apparatus, device, platform, or device cluster that has computing and processing capabilities. As shown in FIG. 5, the model training method includes the following steps.

S510: Obtain a first sample set, where the first sample set includes a first training sample, and the first training sample includes at least one advertisement feature of an advertisement and at least one context feature corresponding to the advertisement.

In this embodiment, the first sample set may include at least one training sample. The first sample set may be preset by a user. Certainly, the first sample set may alternatively be a set of training samples collected by using an operation log of the user on a terminal device (for example, a mobile phone or a computer). For example, the operation log may be related to an advertisement, or may be irrelevant to the advertisement. Each training sample in the first sample set may include at least one advertisement feature of one advertisement and at least one context feature corresponding to the advertisement. Different training samples may correspond to different advertisements. For example, the first training sample may include an advertisement feature of an advertisement a and a context feature corresponding to the advertisement a, and a second training sample may include an advertisement feature of an advertisement b and a context feature corresponding to the advertisement b. For example, each advertisement feature may be any one of a title, a category, a brand, a tag, text content, picture content, video content, or the like of the advertisement. Each context feature may be a content context feature corresponding to the advertisement, and/or an environment context feature corresponding to the advertisement. The content context feature may include a context record of content included in the advertisement when the user accesses the advertisement, for example, a web page text, an identifier of a web page picture, an identifier of a video, or an identifier of an audio. The environment context feature may include a context record related to an environment when the user accesses the advertisement, for example, IP address information, access time, a device type of an electronic device, an operator that provides a network service for the electronic device, a network type of the electronic device, a system language of the electronic device, a brand of the electronic device, a model of the electronic device, a scenario in which the electronic device needs to display an advertisement, a size of an area that is in a display interface of the electronic device and that is used to display an advertisement, and a country in which the electronic device is located. In some embodiments, the training sample in the first sample set may be a positive sample, or may be a negative sample. This may be specifically determined based on an actual situation.

For example, a set of context features included in the first sample set may be understood as the context feature data set described in FIG. 3, and a set of advertisement features included in the first sample set may be understood as the advertisement feature data set described in FIG. 3.

S520: Process, by using a first model, the context feature included in the first training sample, to obtain a first feature vector; and process, by using a second model, the advertisement feature included in the first training sample, to obtain a second feature vector.

In this embodiment, the context feature included in the first training sample may be processed by using the first model, to obtain the first feature vector; and the advertisement feature included in the first training sample may be processed by using the second model, to obtain the second feature vector. For example, the first model may be understood as the user tower apparatus 310 in FIG. 3, and the second model may be understood as the advertisement tower apparatus 320 in FIG. 3. The first feature vector may be understood as a result output by the user tower apparatus 310 after the context feature included in the first training sample is input into the user tower apparatus 310. The second feature vector may be understood as a result output by the advertisement tower apparatus 320 after the advertisement feature included in the first training sample is input into the advertisement tower apparatus 320.

In some embodiments, the context feature included in the first training sample may be encoded by using the first model, to obtain N feature vectors. For example, the context feature may be in one-to-one correspondence to the feature vector obtained through encoding, or certainly may not be in one-to-one correspondence to the feature vector obtained through encoding. This may be specifically determined based on an actual situation. When N=1, the obtained feature vector may be processed by using the first model, for example, sufficient feature interaction may be performed across different dimensions, to obtain the first feature vector. When N≥2, the N obtained feature vectors may be first concatenated by using the first model, to obtain one feature vector. Then, the feature vector obtained through concatenation is processed by using the first model, for example, sufficient feature interaction is performed across different dimensions, to obtain the first feature vector.

In some embodiments, the advertisement feature included in the first training sample may be encoded by using the second model, to obtain M feature vectors. For example, the advertisement feature may be in one-to-one correspondence to the feature vector obtained through encoding, or certainly may not be in one-to-one correspondence to the feature vector obtained through encoding. This may be specifically determined based on an actual situation. When M=1, the obtained feature vector may be processed by using the second model, for example, sufficient feature interaction may be performed across different dimensions, to obtain the second feature vector. When M≥2, the M obtained feature vectors may be first concatenated by using the second model, to obtain one feature vector. Then, the feature vector obtained through concatenation is processed by using the second model, for example, sufficient feature interaction is performed across different dimensions, to obtain the second feature vector.

S530: Process a processing result of at least one stage in the first model and a processing result of at least one stage in the second model by using a third model, to obtain a first correlation score, where the first correlation score represents a matching degree between the context feature included in the first training sample and the advertisement feature included in the first training sample.

In this embodiment, the processing result of the at least one stage in the first model and the processing result of the at least one stage in the second model may be processed by using the third model, to obtain the first correlation score. The first correlation score may represent the matching degree between the context feature included in the first training sample and the advertisement feature included in the first training sample. For example, the third model may be understood as the auxiliary network apparatus 340 in FIG. 3. For example, the third model may be a neural network model, and may be used to assist, in a process of training the first model and the second model, in calculating a loss corresponding to the training sample in the first sample set.

In some embodiments, the processing result of the at least one stage in the first model may be a result output by any one or more neural network layers in the first model. When the first model is the user tower apparatus 310 in FIG. 3, the processing result of the at least one stage in the first model may be one or more of a result output by the feature encoding apparatus 311, a result output by the feature concatenation apparatus 312, and a result output by the primary network apparatus 313.

In some embodiments, the processing result of the at least one stage in the second model may be a result output by any one or more neural network layers in the second model. When the first model is the advertisement tower apparatus 320 in FIG. 3, the processing result of the at least one stage in the second model may be one or more of a result output by the feature encoding apparatus 321, a result output by the feature concatenation apparatus 322, and a result output by the primary network apparatus 323.

S540: Obtain, based on the first feature vector, the second feature vector, the first correlation score, and a sample label of the first training sample, a loss corresponding to the first training sample.

In this embodiment, after the first feature vector, the second feature vector, and the first correlation score are obtained, the loss corresponding to the first training sample may be determined based on the first feature vector, the second feature vector, the first correlation score, and the sample label of the first training sample.

In some embodiments, a first loss may be first obtained based on the first feature vector, the second feature vector, and the sample label of the first training sample. Then, a second loss is obtained based on the first correlation score and the sample label of the first training sample. Finally, the loss corresponding to the first training sample is obtained based on the first loss and the second loss. A sequence of obtaining the first loss and the second loss may be determined based on an actual situation, and is not limited herein.

For the first loss, the first feature vector and the second feature vector may be processed based on, but not limited to, a cosine similarity algorithm, to obtain a correlation score between the first feature vector and the second feature vector. The correlation score may represent the matching degree between the context feature included in the first training sample and the advertisement feature included in the first training sample. Then, the correlation score and the sample label of the first training sample may be processed by using a preset loss function, to obtain the first loss. For example, the first loss may be obtained through processing by the dual-tower loss apparatus 330 described in FIG. 3.

For the second loss, the first correlation score and the sample label of the first training sample may be processed by using a preset loss function, to obtain the second loss. For example, the second loss may be obtained through processing by the auxiliary network loss apparatus 350 described in FIG. 3.

The loss corresponding to the first training sample may be obtained by performing addition, weighted averaging, or multiplication on the first loss and the second loss. This may be specifically determined based on an actual situation, and is not limited herein.

The foregoing describes a process of processing one training sample in the first sample set. For other training samples in the first sample set, refer to the process of processing the first training sample, to obtain a loss corresponding to each of the other training samples. Details are not described herein again.

After a loss of each training sample in the first sample set is determined, S550 may be performed. In some embodiments, S550 may alternatively be performed once each time one loss is obtained, or S550 may alternatively be performed once each time a batch of (for example, two or three) losses are obtained. This may be specifically determined based on an actual situation, and is not limited herein. In addition, a loss described in S550 is the loss obtained in this case.

S550: Train the first model and the second model based on a loss corresponding to the at least one training sample in the first sample set.

In this embodiment, after losses corresponding to one or more training samples are obtained, the first model and the second model may be trained to minimize these losses. Certainly, the third model may also be trained. For example, after the losses corresponding to the one or more training samples are obtained, parameters in the first model and the second model may be updated by using, but not limited to, a backpropagation algorithm, to complete training of the first model and the second model.

In some embodiments, the first model may be used to perform feature extraction on a context feature related to a page accessed by the user, and the second model may be used to perform feature extraction on an advertisement.

In this way, the context feature is used to replace a user feature for model training, and therefore dependency on the user feature in a subsequent model use process is reduced. In addition, the third model is added in the process of training the first model and the second model, to implement interaction modeling between the first model and the second model, and therefore implement interaction between the context feature and the advertisement feature, enhance association between the context feature and the advertisement feature, and improve representation effect of the finally obtained first model and second model.

After training of the first model and the second model is completed, the two models may be used for advertisement placement. The trained first model may be understood as the context representation model 500 described in FIG. 3, and the trained second model may be understood as the advertisement representation model 600 described in FIG. 3.

For example, FIG. 6 shows an advertisement placement method. It may be understood that the method may be performed by any apparatus, device, platform, or device cluster that has computing and processing capabilities. For example, the method may be performed by an electronic device having a display. As shown in FIG. 6, the advertisement placement method includes the following steps.

S610: Obtain an access operation of a user on a first page.

In this embodiment, when the user browses a specific page on the electronic device or delivers an instruction for accessing a specific page, the electronic device may obtain an access operation of the user on the page.

For example, the electronic device is a mobile phone. In a process of using the mobile phone, when the user uses a browser configured on the mobile phone, after the user enters a specific keyword and taps to search, an interface presented by the browser may be the first page accessed by the user. In this case, an operation of tapping to search by the user may be understood as the access operation. In addition, the user selects content in the interface presented by the browser, and taps to browse the content. Then, an interface presented by the browser may be the first page accessed by the user. In this case, an operation of tapping to browse the related content by the user may be understood as the access operation.

S620: In response to the access operation of the user, obtain a first context feature related to the first page, where the first context feature is irrelevant to a user profile and/or a user behavior of the user.

In this embodiment, with authorization of the user, information about the page accessed by the user may be actively obtained, and the information is analyzed to determine a context feature related to content of the first page, for example, an identifier of the page, or an identifier of a text, a video, a picture, or an audio on the page; and/or with authorization of the user, context information of an environment when the user accesses the first page may also be obtained, to obtain a context feature related to the environment for accessing the first page, for example, one or more of IP region information of the user, access time, a device type of the electronic device, an operator that provides a network service for the electronic device, a network type of the electronic device, a system language of the electronic device, a brand of the electronic device, a model of the electronic device, a scenario in which the electronic device needs to display an advertisement, a size of an area that is in a display interface of the electronic device and that is used to display an advertisement, a country in which the electronic device is located, and the like. For example, different display interfaces on the electronic device may be used to present different content to the user. In this embodiment, the context feature related to the content of the first page and/or the context feature related to the environment for accessing the first page are/is irrelevant to the user profile and/or the user behavior of the user. For example, the first context feature may include the context feature related to the content of the first page, and/or the context feature related to the environment for accessing the first page. The first context feature is irrelevant to the user profile and/or the user behavior of the user.

S630: Display f advertisements based on the first context feature, where f≥1.

In this embodiment, after the first context feature is obtained, the f advertisements may be displayed, where f≥1.

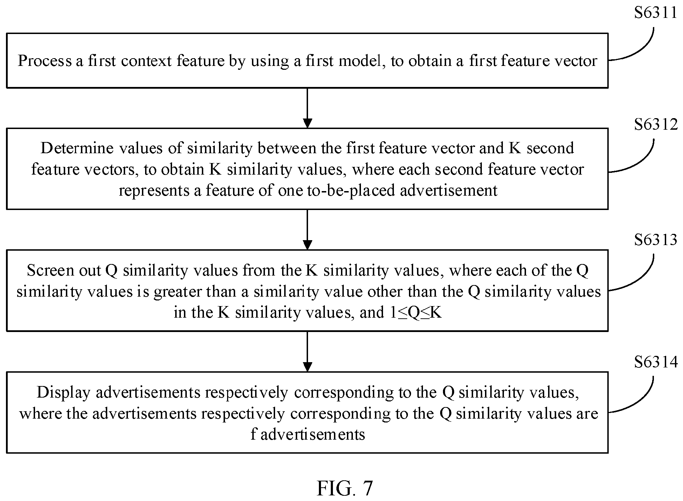

In a possible implementation, the context representation model 500 (referred to as a "first model" below) obtained through training in FIG. 3 may be configured in the electronic device. In this case, as shown in FIG. 7, displaying the f advertisements based on the first context feature may specifically include the following steps.

S6311: Process the first context feature by using the first model, to obtain a first feature vector.

In this embodiment, after the context feature is obtained, the first context feature may be input into the first model obtained through the foregoing model training, to process the context feature by using the first model, to obtain the first feature vector.

S6312: Determine similarity values between the first feature vector and K second feature vectors, to obtain K similarity values, where each second feature vector represents a feature of one advertisement.

In this embodiment, features of K to-be-placed advertisements may be processed in advance by using a second model obtained through the foregoing model training, to obtain the K second feature vectors. One second feature vector corresponds to one advertisement. Each second feature vector represents a feature of one advertisement. Then, after the first feature vector is obtained, the similarity values between the first feature vector and the K second feature vectors may be determined by using a cosine similarity algorithm or the like, to obtain the K similarity values.

S6313: Screen out Q similarity values from the K similarity values, where each of the Q similarity values is greater than a similarity value other than the Q similarity values in the K similarity values, and 1≤Q≤K.

In this embodiment, after the K similarity values are obtained, the K similarity values may be sorted, for example, in descending order or in ascending order. Then, Q larger similarity values are selected from the K similarity values. Each of the Q similarity values is greater than the similarity value other than the Q similarity values in the K similarity values, and 1≤Q≤K. For example, a value of Q may be, but is not limited to, a preset value. For example, if Q is equal to 2, K=4, and the K similarity values are 2, 4, 6, and 7, screened similarity values are 6 and 7. For example, S6311 to S6313 may be understood as a process of obtaining, based on the context feature, Q advertisements or information that indicate Q advertisements (that is, Q pieces of advertisement indication information). After the Q similarity values are screened out, advertisements respectively corresponding to the Q similarity values may be used as advertisements that need to be placed, or information that indicate advertisements and that respectively correspond to the Q similarity values are used as information that indicate advertisements that need to be placed. A quantity of advertisements that need to be placed is the same as the value of Q, and a quantity of pieces of information about an advertisement that needs to be placed is also the same as the value of Q. For example, the quantity of advertisements that need to be placed or the quantity of pieces of information about an advertisement that needs to be placed may alternatively be represented by another quantity, for example, k, R, or g, but these values are the same as Q in the Q screened similarity values.

S6314: Display the advertisements respectively corresponding to the Q similarity values, where the advertisements respectively corresponding to the Q similarity values are the f advertisements.

In this embodiment, after the Q similarity values are screened out, the advertisements respectively corresponding to the Q similarity values may be used as advertisements that need to be placed this time, and the advertisements are displayed, so that the user can browse the advertisements. The advertisements respectively corresponding to the Q similarity values are the f advertisements described in S630.

In this way, the f advertisements are displayed based on the first context feature.

In another possible implementation, S6311 to S6313 in FIG. 7 may be performed by another device, for example, a server. The server is used as an example. In this case, after obtaining the first context feature, the electronic device may send a message including the first context feature to the server. After obtaining the message sent by the electronic device, the server may perform S6311 to S6313 in FIG. 7. After performing S6313, the server may send, to the electronic device, a message indicating the electronic device to display the advertisements respectively corresponding to the Q similarity values. For example, the message sent by the server to the electronic device may include the advertisements (that is, the Q advertisements) respectively corresponding to the Q similarity values, or advertisement indication information used to generate the Q advertisements. After the electronic device receives the message sent by the server, the electronic device may display the Q advertisements. For example, the advertisement indication information may include elements, templates, template identifiers, and the like of the Q advertisements. In this implementation, the first model may be configured in the electronic device, or the first model may not be configured in the electronic device. This is not limited herein. For example, the advertisement indication information may also be referred to as information indicating an advertisement.

In still another possible implementation, S6312 and S6313 in FIG. 7 may be performed by another device, for example, a server. The server is used as an example. In this case, after obtaining the first feature vector, the electronic device may send a message including the first feature vector to the server. After obtaining the message sent by the electronic device, the server may perform S6312 and S6313 in FIG. 7. After performing S6313, the server may send, to the electronic device, a message indicating the electronic device to display the advertisements respectively corresponding to the Q similarity values. For example, the message sent by the server to the electronic device may include the advertisements (that is, the Q advertisements) respectively corresponding to the Q similarity values, or advertisement indication information used to generate the Q advertisements. After the electronic device receives the message sent by the server, the electronic device may display the Q advertisements. For example, the advertisement indication information may include elements, templates, template identifiers, and the like of the Q advertisements. In this implementation, the first model may be configured in the electronic device. For example, the advertisement indication information may also be referred to as information indicating an advertisement.

In yet another possible implementation, S6311 in FIG. 7 may be performed by another device, for example, a server. The server is used as an example. In this case, after obtaining the first context feature, the electronic device may send a message including the first context feature to the server, where the message may indicate the server to perform feature extraction on the first context feature. After obtaining the message sent by the electronic device, the server may perform S6311 in FIG. 7. After performing S6311, the server may send a message including the first feature vector to the electronic device. Then, the electronic device may perform S6312 to S6314 in FIG. 7.

In this way, during advertisement placement, a context feature is used to replace a user feature, to reduce dependence on the user feature, implement, when the user feature (for example, a user profile or a user behavior) cannot be obtained, precise advertisement placement by using a context feature related to a page accessed by the user, and resolve a problem of trade-off between privacy protection of user information and precise advertisement placement.

In some embodiments, after S630, when the user performs page switching on the electronic device, the electronic device may further obtain a second access operation of the user on a second page. Then, in response to the second access operation, the electronic device may obtain a second context feature related to the second page, where the second context feature is irrelevant to the user profile and/or the user behavior of the user. Finally, the electronic device may display g advertisements based on the second context feature, where g≥1, and at least a part of the g advertisements is different from an advertisement in the f advertisements. For example, the second context feature may include one or more of an identifier of the second page, a text on the second page, an identifier of a video on the second page, an identifier of a picture on the second page, an identifier of an audio on the second page, the IP region information of the user, access time, the device type of the electronic device, the operator that provides the network service for the electronic device, the network type of the electronic device, the system language of the electronic device, the brand of the electronic device, the model of the electronic device, the scenario in which the electronic device needs to display the advertisement (for example, a startup scenario or a scenario in which a specific application is used), the size of the area that is in the display interface of the electronic device and that is used to display the advertisement, and the country in which the electronic device is located. In some embodiments, for an execution step after S630, refer to the descriptions of FIG. 6, provided that the first page is replaced with the second page, the first context feature is replaced with the second context feature, and the g advertisements are replaced with the f advertisements in FIG. 6. Details are not described herein again. In addition, for a process of displaying the g advertisements based on the second context feature, refer to the foregoing descriptions of displaying the f advertisements based on the first context feature, provided that the first context feature is replaced with the second context feature, the first feature vector is replaced with a second feature vector, and the g advertisements are replaced with the f advertisements. Details are not described herein again. The second context feature may include one or more of the following: the identifier of the second page, the text on the second page, the identifier of the video on the second page, the identifier of the picture on the second page, the identifier of the audio on the second page, the IP region information of the user, the access time, and the type, the operator, and a networking mode of the electronic device used by the user.

For ease of understanding, the following uses examples for description.

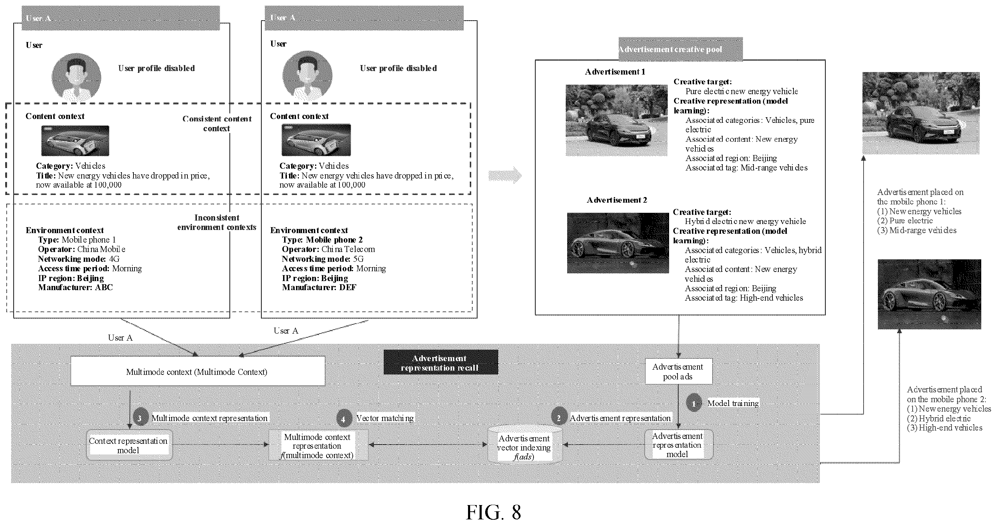

As shown in FIG. 8, a user A carries two mobile phones, which are a mobile phone 1 and a mobile phone 2. A networking mode of the mobile phone 1 is the 4th generation mobile communication technology (the 4th generation mobile communication technology, 4G), and a networking mode of the mobile phone 2 is the 5th generation mobile communication technology (the 5th generation mobile communication technology, 5G). The mobile phone 1 and the mobile phone 2 have different operators and different manufacturers. When the advertisement placement method provided in this embodiment is used, when the user A browses a same page at same time by separately using the mobile phone 1 and the mobile phone 2, because a context feature related to content of the page when the user browses the page on the mobile phone 1 is the same as a context feature related to the content of the page when the user browses the page on the mobile phone 2, and an environment context related to the page when the user browses the page on the mobile phone 1 is different from an environment context related to the page when the user browses the page on the mobile phone 2, advertisements recommended to the user A when the user browses the same page by using the mobile phone 1 and the mobile phone 2 may be different. Still refer to FIG. 8. An advertisement recommended on the mobile phone 1 used by the user A may be a mid-range pure electric new energy vehicle, and an advertisement recommended on the mobile phone 2 used by the user A may be a high-end hybrid electric new energy vehicle.

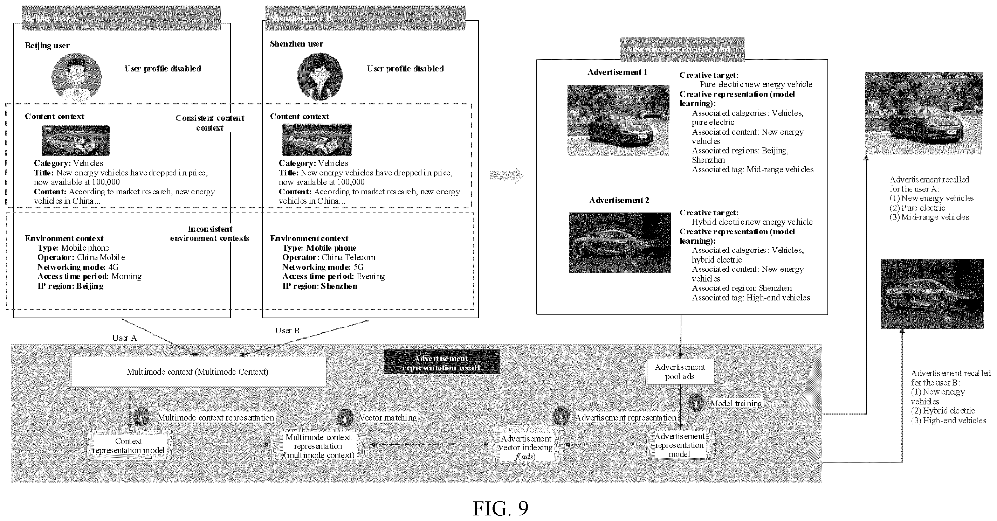

In addition, when the user A and a user B use a same type of mobile phone (for example, mobile phones used by the user A and the user B have a same networking mode, a same operator, a same manufacturer, and the like), and access a same page at same time and at a same place, because in this embodiment, advertisement recommendation is performed based on a context feature of a page accessed by a user, and context features of the page accessed by the user A and the user B are the same, a same advertisement may be recommended to the user A and the user B. For comparison, when advertisement recommendation is performed by using a user feature, although the context features of the page accessed by the user A and the user B are the same, because user features of the user A and the user B are different, advertisements recommended to the user A and the user B are different. In addition, as shown in FIG. 9, when user profiles are disabled, if content contexts of pages browsed by users in two different regions are consistent, but environment contexts related to the pages are inconsistent, and two advertisements are stored in an advertisement pool, through analysis of context features of the pages accessed by the two users, and matching on the context features and features of the advertisements in the advertisement pool, it may be determined that an advertisement of a mid-range pure electric new energy vehicle is recommended to a user A, and an advertisement of a high-end hybrid electric new energy vehicle is recommended to a user B.

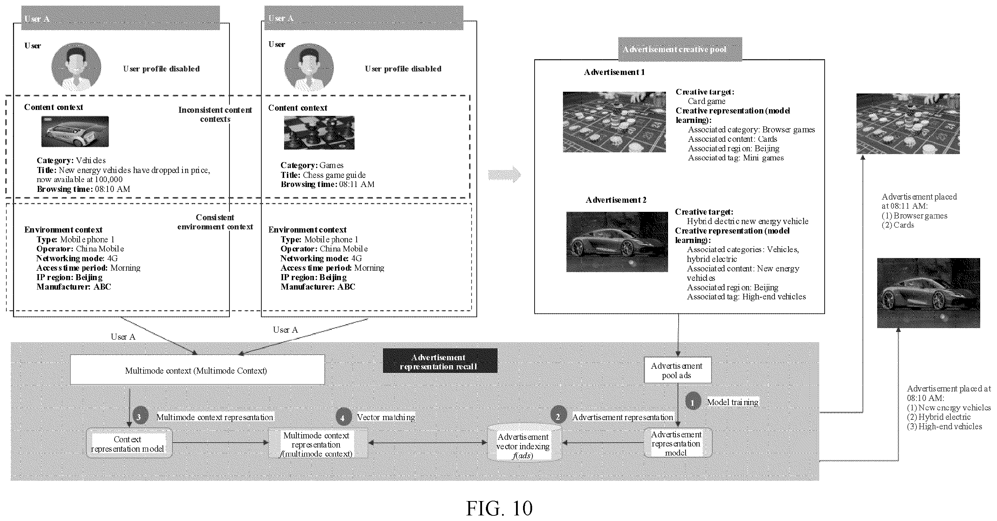

In addition, when a user uses a same mobile phone to browse different pages at different time, the different pages include different content. Therefore, when the user switches a page, a placed advertisement may be changed accordingly. For example, as shown in FIG. 10, a user A browses a page related to a vehicle at 08:10 AM, and browses a page related to a game at 08:11 AM, that is, the user performs page switching in a process of using a mobile phone. Two advertisements are stored in an advertisement pool. An advertisement 1 is a game advertisement, and an advertisement 2 is a vehicle advertisement. Because the user A browses content related to the vehicle at 08:10 AM, an advertisement related to the vehicle, that is, the advertisement 2, may be placed in this case. Because the user A browses content related to the game at 08:11 AM, an advertisement related to the game, that is, the advertisement 1, may be placed in this case.

It may be understood that sequence numbers of the steps in the foregoing embodiments do not mean execution sequences. The execution sequences of the processes should be determined based on functions and internal logic of the processes, and should not be construed as any limitation on implementation processes of embodiments of this application. In addition, in some possible implementations, the steps in the foregoing embodiments may be selectively performed, or may be partially performed, or may be completely performed based on an actual situation. This is not limited herein.

Based on the method in the foregoing embodiments, an embodiment of this application further provides a model training apparatus.

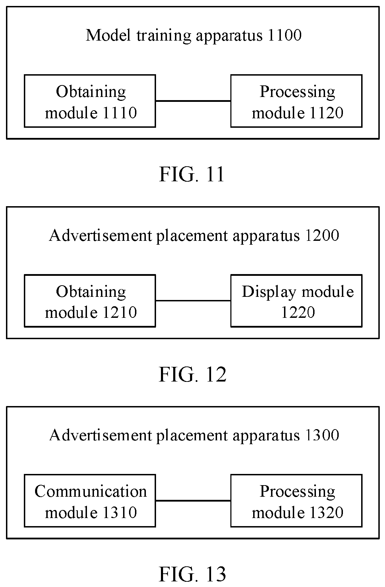

For example, FIG. 11 shows a model training apparatus. As shown in FIG. 11, the model training apparatus 1100 includes an obtaining module 1110 and a processing module 1120. The obtaining module 1110 is configured to obtain a first sample set, where the first sample set includes a first training sample, and the first training sample includes at least one advertisement feature of an advertisement and at least one context feature corresponding to the advertisement. The processing module 1120 is configured to: process the at least one context feature by using a first model, to obtain a first feature vector; and process the at least one advertisement feature by using a second model, to obtain a second feature vector. The processing module 1120 is further configured to process a processing result of at least one stage in the first model and a processing result of at least one stage in the second model by using a third model, to obtain a first correlation score, where the first correlation score represents a matching degree between the at least one context feature and the at least one advertisement feature. The processing module 1120 is further configured to obtain, based on the first feature vector, the second feature vector, the first correlation score, and a sample label of the first training sample, a loss corresponding to the first training sample. The processing module 1120 is further configured to train the first model and the second model based on a loss corresponding to at least one training sample in the first sample set.

In some embodiments, when processing the at least one context feature by using the first model, to obtain the first feature vector, the processing module 1120 is specifically configured to: encode the at least one context feature by using the first model, to obtain N third feature vectors, where N≥1; and when N=1, process the N third feature vectors by using the first model, to obtain the first feature vector; or when N≥2, concatenate the N third feature vectors by using the first model, to obtain one fourth feature vector; and process the fourth feature vector by using the first model, to obtain the first feature vector.

In some embodiments, when processing the at least one advertisement feature by using the second model, to obtain the second feature vector, the processing module 1120 is specifically configured to: encode the at least one advertisement feature by using the second model, to obtain M fifth feature vectors, where M≥1; and when M=1, process the M fifth feature vectors by using the second model, to obtain the second feature vector; or when M≥2, concatenate the M fifth feature vectors by using the second model, to obtain one sixth feature vector; and process the sixth feature vector by using the second model, to obtain the second feature vector.

In some embodiments, when obtaining, based on the first feature vector, the second feature vector, the first correlation score, and the sample label of the first training sample, the loss corresponding to the first training sample, the processing module 1120 is specifically configured to: obtain a first loss based on the first feature vector, the second feature vector, and the sample label of the first training sample; obtain a second loss based on the first correlation score and the sample label of the first training sample; and obtain, based on the first loss and the second loss, the loss corresponding to the first training sample.

In some embodiments, when obtaining the first loss based on the first feature vector, the second feature vector, and the sample label of the first training sample, the processing module 1120 is specifically configured to: determine a second correlation score based on the first feature vector and the second feature vector, where the second correlation score represents a matching degree between the at least one context feature and the at least one advertisement feature; and obtain the first loss based on the second correlation score and the sample label of the first training sample.

In some embodiments, the processing module 1120 is further configured to: train the third model based on a loss corresponding to at least one training sample in the first sample set.

In some embodiments, the trained first model is used to perform feature extraction on a context feature related to a page accessed by a user, and the trained second model is used to perform feature extraction on an advertisement.

In some embodiments, the third model is a neural network model, and is used to assist, in a process of training the first model and the second model, in calculating a loss corresponding to a training sample in the first sample set.

It should be understood that the foregoing apparatus is configured to perform the model training method described in the foregoing embodiment, and an implementation principle and technical effect of a corresponding program module in the apparatus are similar to the descriptions in the foregoing method. For a working process of the apparatus, refer to a corresponding process in the foregoing method. Details are not described herein again.

Based on the method in the foregoing embodiments, an embodiment of this application further provides an advertisement placement apparatus.

For example, FIG. 12 shows an advertisement placement apparatus. The advertisement placement apparatus may be deployed in an electronic device having a display. As shown in FIG. 12, the advertisement placement apparatus 1200 includes an obtaining module 1210 and a display module 1220. The obtaining module is configured to: obtain an access operation of a user on a first page; and in response to the access operation, obtain a first context feature related to the first page, where the context feature is irrelevant to a user profile and/or a user behavior of the user. The display module 1220 is configured to display f advertisements based on the first context feature, where f≥1.

In some embodiments, after the display module 1220 displays the f advertisements, the obtaining module 1210 is further configured to: obtain a second access operation of the user on a second page; and in response to the second access operation, obtain a second context feature related to the second page, where the second context feature is irrelevant to the user profile and/or the user behavior of the user. The display module 1220 is further configured to display g advertisements based on the second context feature, where g≥1, and at least a part of the g advertisements is different from an advertisement in the f advertisements.

In some embodiments, the apparatus further includes: a processing module (not shown in the figure), configured to process the context feature by using a first model, to obtain a first feature vector, where the first model is a neural network model, and the context feature is the first context feature or the second context feature. The processing module is further configured to determine similarity values between the first feature vector and K second feature vectors, to obtain K similarity values, where each second feature vector represents a feature of one advertisement. The processing module is further configured to screen out Q similarity values from the K similarity values, where each of the Q similarity values is greater than a similarity value other than the Q similarity values in the K similarity values, and 1≤Q≤K. The display module 1220 is configured to display advertisements respectively corresponding to the Q similarity values, where when the context feature is the first context feature, the advertisements respectively corresponding to the Q similarity values are the f advertisements; or when the context feature is the second context feature, the advertisements respectively corresponding to the Q similarity values are the g advertisements.

In some embodiments, the apparatus further includes: a communication module (not shown in the figure), configured to send a first message to a server, where the first message includes the context feature, and the context feature is the first context feature or the second context feature. The communication module is further configured to receive a second message sent by the server, where the second message includes Q advertisements or advertisement indication information; the advertisement indication information are used to generate the Q advertisements; and when the context feature is the first context feature, the Q advertisements are the f advertisements; or when the context feature is the second context feature, the Q advertisements are the g advertisements. The display module 1220 is configured to display the Q advertisements.

In some embodiments, the apparatus further includes: a processing module (not shown in the figure), configured to process the context feature by using a first model, to obtain a first feature vector, where the first model is a neural network model, and the context feature is the first context feature or the second context feature; and a communication module, configured to send a first message to a server, where the first message includes the first feature vector. The communication module is further configured to receive a second message sent by the server, where the second message includes Q advertisements or advertisement indication information; the advertisement indication information are used to generate the Q advertisements; and when the context feature is the first context feature, the Q advertisements are the f advertisements; or when the context feature is the second context feature, the Q advertisements are the g advertisements. The display module 1220 is configured to display the Q advertisements.

In some embodiments, the apparatus further includes: a communication module (not shown in the figure), configured to send a first message to a server, where the first message includes the context feature, the first message indicates the server to perform feature extraction on the context feature, and the context feature is the first context feature or the second context feature, where the communication module is further configured to receive a second message sent by the server, where the second message includes a first feature vector extracted by the server based on the context feature; and a processing module (not shown in the figure), configured to determine similarity values between the first feature vector and K second feature vectors, to obtain K similarity values, where each second feature vector represents a feature of one advertisement. The processing module is further configured to screen out Q similarity values from the K similarity values, where each of the Q similarity values is greater than a similarity value other than the Q similarity values in the K similarity values, and 1≤Q≤K. The display module 1220 is configured to display advertisements respectively corresponding to the Q similarity values, where when the context feature is the first context feature, the advertisements respectively corresponding to the Q similarity values are the f advertisements; or when the context feature is the second context feature, the advertisements respectively corresponding to the Q similarity values are the g advertisements.

In some embodiments, the first context feature includes one or more of the following: an identifier of the first page, a text on the first page, an identifier of a video on the first page, an identifier of a picture on the first page, an identifier of an audio on the first page, IP region information of the user, access time, a device type of the electronic device, an operator that provides a network service for the electronic device, a network type of the electronic device, a system language of the electronic device, a brand of the electronic device, a model of the electronic device, a scenario in which the electronic device needs to display an advertisement, a size of an area that is in a display interface of the electronic device and that is used to display an advertisement, and a country in which the electronic device is located.

In some embodiments, the second context feature includes one or more of the following: an identifier of the second page, a text on the second page, an identifier of a video on the second page, an identifier of a picture on the second page, an identifier of an audio on the second page, the IP region information of the user, the access time, the device type of the electronic device, the operator that provides the network service for the electronic device, the network type of the electronic device, the system language of the electronic device, the brand of the electronic device, the model of the electronic device, the scenario in which the electronic device needs to display the advertisement, the size of the area that is in the display interface of the electronic device and that is used to display the advertisement, and the country in which the electronic device is located.

It should be understood that the foregoing apparatus is configured to perform the advertisement placement method described in the foregoing embodiment, and an implementation principle and technical effect of a corresponding program module in the apparatus are similar to the descriptions in the foregoing method. For a working process of the apparatus, refer to a corresponding process in the foregoing method. Details are not described herein again.

Based on the method in the foregoing embodiments, an embodiment of this application further provides an advertisement placement apparatus.

For example, FIG. 13 shows an advertisement placement apparatus. The advertisement placement apparatus may be deployed in a server. As shown in FIG. 13, the advertisement placement apparatus 1300 includes a communication module 1310 and a processing module 1320. The communication module 1310 may be configured to receive a first message sent by an electronic device, where the first message includes a context feature related to a page accessed by a user on the electronic device, and the context feature is irrelevant to a user profile and/or a user behavior of the user. The processing module 1320 may be configured to: in response to the first message, obtain, based on the context feature, R advertisements or information that indicate R advertisements, where R≥1. The communication module 1310 may be further configured to send a second message to the electronic device, where the second message indicates the electronic device to display the R advertisements.

In some embodiments, when obtaining, based on the context feature, the R advertisements or the information that indicate the R advertisements, the processing module 1320 is specifically configured to: process the context feature by using a first model, to obtain a first feature vector, where the first model is a neural network model; determine similarity values between the first feature vector and K second feature vectors, to obtain K similarity values, where each second feature vector represents a feature of one advertisement; screen out Q similarity values from the K similarity values, where each of the Q similarity values is greater than a similarity value other than the Q similarity values in the K similarity values, and 1≤Q≤K; and use advertisements respectively corresponding to the Q similarity values as the R advertisements, or use information that indicate advertisements and that respectively correspond to the Q similarity values as the information that indicate the R advertisements.

In some embodiments, the context feature includes one or more of the following: an identifier of the page, a text on the page, an identifier of a video on the page, an identifier of a picture on the page, an identifier of an audio on the page, IP region information of the user, access time, and a type, an operator, and a networking mode of the electronic device used by the user.

It should be understood that the foregoing apparatus is configured to perform the advertisement placement method described in the foregoing embodiment, and an implementation principle and technical effect of a corresponding program module in the apparatus are similar to the descriptions in the foregoing method. For a working process of the apparatus, refer to a corresponding process in the foregoing method. Details are not described herein again.

Based on the method in the foregoing embodiments, an embodiment of this application provides an electronic device. The electronic device may include: a display; at least one memory, configured to store a program; and at least one processor, configured to execute the program stored in the memory. When the program stored in the memory is executed, the processor is configured to perform the method described in the foregoing embodiments. For example, the electronic device may be a mobile phone, a tablet computer, a desktop computer, a laptop computer, a handheld computer, a notebook computer, a server, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart household device, and/or a smart city device. A specific type of the electronic device is not specially limited in embodiments of this application.

Based on the method in the foregoing embodiments, an embodiment of this application provides a server. The server may include: at least one memory, configured to store a program; and at least one processor, configured to execute the program stored in the memory. When the program stored in the memory is executed, the processor is configured to perform the method described in the foregoing embodiments. For example, the server may be but is not limited to a cloud server, a virtual machine, a hardware server, or the like. A specific type of the server is not specially limited in embodiments of this application.

Based on the method in the foregoing embodiments, an embodiment of this application provides a computer-readable storage medium. The computer-readable storage medium stores a computer program. When the computer program is run on a processor, the processor is enabled to perform the method in the foregoing embodiments.

Based on the method in the foregoing embodiments, an embodiment of this application provides a computer program product. When the computer program product runs on a processor, the processor is enabled to perform the method in the foregoing embodiments.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, the storage medium is coupled to the processor, so that the processor can read information from the storage medium or write information into the storage medium. Certainly, the storage medium may alternatively be a component of the processor. The processor and the storage medium may be located in an ASIC.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

It may be understood that various numbers in embodiments of this application are merely used for differentiation for ease of description, and are not used to limit the scope of embodiments of this application.

## Claims

1. A model training method, wherein the method comprises:
obtaining a first sample set, wherein the first sample set comprises a first training sample, and the first training sample comprises at least one advertisement feature of an advertisement and at least one context feature corresponding to the advertisement;
processing the at least one context feature by using a first model, to obtain a first feature vector; and processing the at least one advertisement feature by using a second model, to obtain a second feature vector;
processing a processing result of at least one stage in the first model and a processing result of at least one stage in the second model by using a third model, to obtain a first correlation score, wherein the first correlation score represents a matching degree between the at least one context feature and the at least one advertisement feature;
obtaining, based on the first feature vector, the second feature vector, the first correlation score, and a sample label of the first training sample, a loss corresponding to the first training sample; and
training the first model and the second model based on a loss corresponding to at least one training sample in the first sample set.

2. The method according to claim 1, wherein the processing the at least one context feature by using a first model, to obtain a first feature vector specifically comprises:
encoding the at least one context feature by using the first model, to obtain N third feature vectors, wherein N≥1; and
when N=1, processing the N third feature vectors by using the first model, to obtain the first feature vector; or
when N≥2, concatenating the N third feature vectors by using the first model, to obtain one fourth feature vector; and processing the fourth feature vector by using the first model, to obtain the first feature vector.

3. The method according to claim 1 or 2, wherein the processing the at least one advertisement feature by using a second model, to obtain a second feature vector specifically comprises:
encoding the at least one advertisement feature by using the second model, to obtain M fifth feature vectors, wherein M≥1; and
when M=1, processing the M fifth feature vectors by using the second model, to obtain the second feature vector; or
when M≥2, concatenating the M fifth feature vectors by using the second model, to obtain one sixth feature vector; and processing the sixth feature vector by using the second model, to obtain the second feature vector.

4. The method according to any one of claims 1 to 3, wherein the obtaining, based on the first feature vector, the second feature vector, the first correlation score, and a sample label of the first training sample, a loss corresponding to the first training sample specifically comprises:
obtaining a first loss based on the first feature vector, the second feature vector, and the sample label of the first training sample;
obtaining a second loss based on the first correlation score and the sample label of the first training sample; and
obtaining, based on the first loss and the second loss, the loss corresponding to the first training sample.

5. The method according to claim 4, wherein the obtaining a first loss based on the first feature vector, the second feature vector, and the sample label of the first training sample specifically comprises:
determining a second correlation score based on the first feature vector and the second feature vector, wherein the second correlation score represents a matching degree between the at least one context feature and the at least one advertisement feature; and
obtaining the first loss based on the second correlation score and the sample label of the first training sample.

6. The method according to any one of claims 1 to 5, wherein the method further comprises:
training the third model based on the loss corresponding to the at least one training sample in the first sample set.

7. The method according to any one of claims 1 to 6, wherein the third model is a neural network model, and is used to assist, in a process of training the first model and the second model, in calculating a loss corresponding to a training sample in the first sample set.

8. The method according to any one of claims 1 to 7, wherein the trained first model is used to perform feature extraction on a context feature related to a page accessed by a user, and the trained second model is used to perform feature extraction on an advertisement.

9. An advertisement placement method, applied to an electronic device having a display, wherein the method comprises:
obtaining a first access operation of a user on a first page;
in response to the first access operation, obtaining a first context feature related to the first page, wherein the first context feature is irrelevant to a user profile and/or a user behavior of the user; and
displaying f advertisements based on the first context feature, wherein f≥1.

10. The method according to claim 9, wherein after the displaying f advertisements, the method further comprises:
obtaining a second access operation of the user on a second page;
in response to the second access operation, obtaining a second context feature related to the second page, wherein the second context feature is irrelevant to the user profile and/or the user behavior of the user; and
displaying g advertisements based on the second context feature, wherein g≥1, and at least a part of the g advertisements is different from an advertisement in the f advertisements.

11. The method according to claim 9 or 10, wherein displaying an advertisement based on a context feature specifically comprises:
processing the context feature by using a first model, to obtain a first feature vector, wherein the first model is a neural network model, and the context feature is the first context feature or the second context feature;
determining similarity values between the first feature vector and K second feature vectors, to obtain K similarity values, wherein each second feature vector represents a feature of one advertisement;
screening out Q similarity values from the K similarity values, wherein each of the Q similarity values is greater than a similarity value other than the Q similarity values in the K similarity values, and 1≤Q≤K; and
displaying advertisements respectively corresponding to the Q similarity values, wherein when the context feature is the first context feature, the advertisements respectively corresponding to the Q similarity values are the f advertisements; or when the context feature is the second context feature, the advertisements respectively corresponding to the Q similarity values are the g advertisements.

12. The method according to claim 9 or 10, wherein displaying an advertisement based on a context feature specifically comprises:
sending a first message to a server, wherein the first message comprises the context feature, and the context feature is the first context feature or the second context feature;
receiving a second message sent by the server, wherein the second message comprises Q advertisements or advertisement indication information; the advertisement indication information are used to generate the Q advertisements; and when the context feature is the first context feature, the Q advertisements are the f advertisements; or when the context feature is the second context feature, the Q advertisements are the g advertisements; and
displaying the Q advertisements.

13. The method according to claim 9 or 10, wherein displaying an advertisement based on a context feature specifically comprises:
processing the context feature by using a first model, to obtain a first feature vector, wherein the first model is a neural network model, and the context feature is the first context feature or the second context feature;
sending a first message to a server, wherein the first message comprises the first feature vector;
receiving a second message sent by the server, wherein the second message comprises Q advertisements or advertisement indication information; the advertisement indication information are used to generate the Q advertisements; and when the context feature is the first context feature, the Q advertisements are the f advertisements; or when the context feature is the second context feature, the Q advertisements are the g advertisements; and
displaying the Q advertisements.

14. The method according to claim 9 or 10, wherein displaying an advertisement based on a context feature specifically comprises:
sending a first message to a server, wherein the first message comprises the context feature, the first message indicates the server to perform feature extraction on the context feature, and the context feature is the first context feature or the second context feature;
receiving a second message sent by the server, wherein the second message comprises a first feature vector extracted by the server based on the context feature;
determining similarity values between the first feature vector and K second feature vectors, to obtain K similarity values, wherein each second feature vector represents a feature of one advertisement;
screening out Q similarity values from the K similarity values, wherein each of the Q similarity values is greater than a similarity value other than the Q similarity values in the K similarity values, and 1≤Q≤K; and
displaying advertisements respectively corresponding to the Q similarity values, wherein when the context feature is the first context feature, the advertisements respectively corresponding to the Q similarity values are the f advertisements; or when the context feature is the second context feature, the advertisements respectively corresponding to the Q similarity values are the g advertisements.

15. The method according to any one of claims 9 to 14, wherein the first context feature comprises one or more of the following: an identifier of the first page, a text on the first page, an identifier of a video on the first page, an identifier of a picture on the first page, an identifier of an audio on the first page, IP region information of the user, access time, a device type of the electronic device, an operator that provides a network service for the electronic device, a network type of the electronic device, a system language of the electronic device, a brand of the electronic device, a model of the electronic device, a scenario in which the electronic device needs to display an advertisement, a size of an area that is in a display interface of the electronic device and that is used to display an advertisement, and a country in which the electronic device is located.

16. The method according to any one of claims 10 to 15, wherein the second context feature comprises one or more of the following: an identifier of the second page, a text on the second page, an identifier of a video on the second page, an identifier of a picture on the second page, an identifier of an audio on the second page, the IP region information of the user, the access time, the device type of the electronic device, the operator that provides the network service for the electronic device, the network type of the electronic device, the system language of the electronic device, the brand of the electronic device, the model of the electronic device, the scenario in which the electronic device needs to display the advertisement, the size of the area that is in the display interface of the electronic device and that is used to display the advertisement, and the country in which the electronic device is located.

17. An advertisement placement method, applied to a server, wherein the method comprises:
receiving a first message sent by an electronic device, wherein the first message comprises a context feature related to a page accessed by a user on the electronic device, and the context feature is irrelevant to a user profile and/or a user behavior of the user;
in response to the first message, obtaining, based on the context feature, R advertisements or information that indicate R advertisements, wherein R≥1; and
sending a second message to the electronic device, wherein the second message indicates the electronic device to display the R advertisements.

18. The method according to claim 17, wherein the method further comprises:
processing the context feature by using a first model, to obtain a first feature vector, wherein the first model is a neural network model;
determining similarity values between the first feature vector and K second feature vectors, to obtain K similarity values, wherein each second feature vector represents a feature of one advertisement;
screening out Q similarity values from the K similarity values, wherein each of the Q similarity values is greater than a similarity value other than the Q similarity values in the K similarity values, and 1≤Q≤K; and
using advertisements respectively corresponding to the Q similarity values as the R advertisements, or using information that indicate advertisements and that respectively correspond to the Q similarity values as the information that indicate the R advertisements.

19. The method according to claim 17 or 18, wherein the context feature comprises one or more of the following: an identifier of the page, a text on the page, an identifier of a video on the page, an identifier of a picture on the page, an identifier of an audio on the page, IP region information of the user, access time, and a type, an operator, and a networking mode of the electronic device used by the user.

20. A model training apparatus, wherein the apparatus comprises:
an obtaining module, configured to obtain a first sample set, wherein the first sample set comprises a first training sample, and the first training sample comprises at least one advertisement feature of an advertisement and at least one context feature corresponding to the advertisement; and
a processing module, configured to: process the at least one context feature by using a first model, to obtain a first feature vector; and process the at least one advertisement feature by using a second model, to obtain a second feature vector, wherein
the processing module is further configured to process a processing result of at least one stage in the first model and a processing result of at least one stage in the second model by using a third model, to obtain a first correlation score, wherein the first correlation score represents a matching degree between the at least one context feature and the at least one advertisement feature;
the processing module is further configured to obtain, based on the first feature vector, the second feature vector, the first correlation score, and a sample label of the first training sample, a loss corresponding to the first training sample; and
the processing module is further configured to train the first model and the second model based on a loss corresponding to at least one training sample in the first sample set.

21. The apparatus according to claim 20, wherein when processing the at least one context feature by using the first model, to obtain the first feature vector, the processing module is specifically configured to:
encode the at least one context feature by using the first model, to obtain N third feature vectors, wherein N≥1; and
when N=1, process the N third feature vectors by using the first model, to obtain the first feature vector; or
when N≥2, concatenate the N third feature vectors by using the first model, to obtain one fourth feature vector; and process the fourth feature vector by using the first model, to obtain the first feature vector.

22. The apparatus according to claim 20 or 21, wherein when processing the at least one advertisement feature by using the second model, to obtain the second feature vector, the processing module is specifically configured to:
encode the at least one advertisement feature by using the second model, to obtain M fifth feature vectors, wherein M≥1; and
when M=1, process the M fifth feature vectors by using the second model, to obtain the second feature vector; or
when M≥2, concatenate the M fifth feature vectors by using the second model, to obtain one sixth feature vector; and process the sixth feature vector by using the second model, to obtain the second feature vector.

23. The apparatus according to any one of claims 20 to 22, wherein when obtaining, based on the first feature vector, the second feature vector, the first correlation score, and the sample label of the first training sample, the loss corresponding to the first training sample, the processing module is specifically configured to:
obtain a first loss based on the first feature vector, the second feature vector, and the sample label of the first training sample;
obtain a second loss based on the first correlation score and the sample label of the first training sample; and
obtain, based on the first loss and the second loss, the loss corresponding to the first training sample.

24. The apparatus according to claim 23, wherein when obtaining the first loss based on the first feature vector, the second feature vector, and the sample label of the first training sample, the processing module is specifically configured to:
determine a second correlation score based on the first feature vector and the second feature vector, wherein the second correlation score represents a matching degree between the at least one context feature and the at least one advertisement feature; and
obtain the first loss based on the second correlation score and the sample label of the first training sample.

25. The apparatus according to any one of claims 20 to 24, wherein the processing module is further configured to:
train the third model based on a loss corresponding to at least one training sample in the first sample set.

26. The apparatus according to any one of claims 20 to 25, wherein the third model is a neural network model, and is used to assist, in a process of training the first model and the second model, in calculating a loss corresponding to a training sample in the first sample set.

27. The apparatus according to any one of claims 20 to 26, wherein the trained first model is used to perform feature extraction on a context feature related to a page accessed by a user, and the trained second model is used to perform feature extraction on an advertisement.

28. An advertisement placement apparatus, deployed in an electronic device having a display, wherein the apparatus comprises:
an obtaining module, configured to obtain a first access operation of a user on a first page, wherein
the obtaining module is further configured to: in response to the first access operation, obtain a first context feature related to the first page, wherein the first context feature is irrelevant to a user profile and/or a user behavior of the user; and
a display module, configured to display f advertisements based on the first context feature, wherein f≥1.

29. The apparatus according to claim 28, wherein after the display module displays the f advertisements, the obtaining module is further configured to: obtain a second access operation of the user on a second page; and in response to the second access operation, obtain a second context feature related to the second page, wherein the second context feature is irrelevant to the user profile and/or the user behavior of the user; and
the display module is further configured to display g advertisements based on the second context feature, wherein g≥1, and at least a part of the g advertisements is different from an advertisement in the f advertisements.

30. The apparatus according to claim 28 or 29, wherein the apparatus further comprises:
a processing module, configured to process the context feature by using a first model, to obtain a first feature vector, wherein the first model is a neural network model, and the context feature is the first context feature or the second context feature, wherein
the processing module is further configured to determine similarity values between the first feature vector and K second feature vectors, to obtain K similarity values, wherein each second feature vector represents a feature of one advertisement;
the processing module is further configured to screen out Q similarity values from the K similarity values, wherein each of the Q similarity values is greater than a similarity value other than the Q similarity values in the K similarity values, and 1≤Q≤K; and
the display module is configured to display advertisements respectively corresponding to the Q similarity values, wherein when the context feature is the first context feature, the advertisements respectively corresponding to the Q similarity values are the f advertisements; or when the context feature is the second context feature, the advertisements respectively corresponding to the Q similarity values are the g advertisements.

31. The apparatus according to claim 28 or 29, wherein the apparatus further comprises:
a communication module, configured to send a first message to a server, wherein the first message comprises the context feature, and the context feature is the first context feature or the second context feature, wherein
the communication module is further configured to receive a second message sent by the server, wherein the second message comprises Q advertisements or advertisement indication information; the advertisement indication information are used to generate the Q advertisements; and when the context feature is the first context feature, the Q advertisements are the f advertisements; or when the context feature is the second context feature, the Q advertisements are the g advertisements; and
the display module is configured to display the Q advertisements.

32. The apparatus according to claim 28 or 29, wherein the apparatus further comprises:
a processing module, configured to process the context feature by using a first model, to obtain a first feature vector, wherein the first model is a neural network model, and the context feature is the first context feature or the second context feature; and
a communication module, configured to send a first message to a server, wherein the first message comprises the first feature vector, wherein
the communication module is further configured to receive a second message sent by the server, wherein the second message comprises Q advertisements or advertisement indication information; the advertisement indication information are used to generate the Q advertisements; and when the context feature is the first context feature, the Q advertisements are the f advertisements; or when the context feature is the second context feature, the Q advertisements are the g advertisements; and
the display module is configured to display the Q advertisements.

33. The apparatus according to claim 28 or 29, wherein the apparatus further comprises:
a communication module, configured to send a first message to a server, wherein the first message comprises the context feature, the first message indicates the server to perform feature extraction on the context feature, and the context feature is the first context feature or the second context feature, wherein
the communication module is further configured to receive a second message sent by the server, wherein the second message comprises a first feature vector extracted by the server based on the context feature; and
a processing module, configured to determine similarity values between the first feature vector and K second feature vectors, to obtain K similarity values, wherein each second feature vector represents a feature of one advertisement, wherein
the processing module is further configured to screen out Q similarity values from the K similarity values, wherein each of the Q similarity values is greater than a similarity value other than the Q similarity values in the K similarity values, and 1≤Q≤K; and
the display module is configured to display advertisements respectively corresponding to the Q similarity values, wherein when the context feature is the first context feature, the advertisements respectively corresponding to the Q similarity values are the f advertisements; or when the context feature is the second context feature, the advertisements respectively corresponding to the Q similarity values are the g advertisements.

34. The apparatus according to any one of claims 28 to 33, wherein the first context feature comprises one or more of the following: an identifier of the first page, a text on the first page, an identifier of a video on the first page, an identifier of a picture on the first page, an identifier of an audio on the first page, IP region information of the user, access time, a device type of the electronic device, an operator that provides a network service for the electronic device, a network type of the electronic device, a system language of the electronic device, a brand of the electronic device, a model of the electronic device, a scenario in which the electronic device needs to display an advertisement, a size of an area that is in a display interface of the electronic device and that is used to display an advertisement, and a country in which the electronic device is located.

35. The apparatus according to any one of claims 29 to 34, wherein the second context feature comprises one or more of the following: an identifier of the second page, a text on the second page, an identifier of a video on the second page, an identifier of a picture on the second page, an identifier of an audio on the second page, the IP region information of the user, the access time, the device type of the electronic device, the operator that provides the network service for the electronic device, the network type of the electronic device, the system language of the electronic device, the brand of the electronic device, the model of the electronic device, the scenario in which the electronic device needs to display the advertisement, the size of the area that is in the display interface of the electronic device and that is used to display the advertisement, and the country in which the electronic device is located.

36. An advertisement placement apparatus, deployed in a server, wherein the apparatus comprises:
a communication module, configured to receive a first message sent by an electronic device, wherein the first message comprises a context feature related to a page accessed by a user on the electronic device, and the context feature is irrelevant to a user profile and/or a user behavior of the user; and
a processing module, configured to: in response to the first message, obtain, based on the context feature, R advertisements or information that indicate R advertisements, wherein R≥1, wherein
the communication module is further configured to send a second message to the electronic device, wherein the second message indicates the electronic device to display the R advertisements.

37. The apparatus according to claim 36, wherein when obtaining, based on the context feature, the R advertisements or the information that indicate the R advertisements, the processing module is specifically configured to:
process the context feature by using a first model, to obtain a first feature vector, wherein the first model is a neural network model;
determine similarity values between the first feature vector and K second feature vectors, to obtain K similarity values, wherein each second feature vector represents a feature of one advertisement;
screen out Q similarity values from the K similarity values, wherein each of the Q similarity values is greater than a similarity value other than the Q similarity values in the K similarity values, and 1≤Q≤K; and
use advertisements respectively corresponding to the Q similarity values as the R advertisements, or use information that indicate advertisements and that respectively correspond to the Q similarity values as the information that indicate the R advertisements.

38. The apparatus according to claim 36 or 37, wherein the context feature comprises one or more of the following: an identifier of the page, a text on the page, an identifier of a video on the page, an identifier of a picture on the page, an identifier of an audio on the page, IP region information of the user, access time, and a type, an operator, and a networking mode of the electronic device used by the user.

39. An electronic device, comprising:
a display;
at least one memory, configured to store a program; and
at least one processor, configured to execute the program stored in the memory, wherein
when the program stored in the memory is executed, the processor is configured to perform the method according to any one of claims 9 to 16.

40. A server, comprising:
at least one memory, configured to store a program; and
at least one processor, configured to execute the program stored in the memory, wherein
when the program stored in the memory is executed, the processor is configured to perform the method according to any one of claims 17 to 19.

41. A computer-readable storage medium, wherein the computer-readable storage medium stores a computer program; and when the computer program is run on a processor, the processor is enabled to perform the method according to any one of claims 1 to 19.

42. A computer program product, wherein when the computer program product runs on a processor, the processor is enabled to perform the method according to any one of claims 1 to 19.
